# EUROPEAN PATENT APPLICATION

(11) **EP 4 723 529 A1**
(43) Date of publication of application: **08.04.2026**
(21) Application number: 24814408.1
(22) Date of filing: 28.05.2024
(51) Int. Cl.: H04L 5/00, H04W 72/0446, H04W 72/232

(54) **METHOD USED IN NODE FOR WIRELESS COMMUNICATION AND APPARATUS**

(30) Priority: 29.05.2023 CN 202310615925
(71) Applicant: Apogee Networks, LLC, Plano, TX 75024 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2024/095646
(87) International publication number: WO 2024/245211

(57) **Abstract**

A method used in a node for wireless communication and an apparatus. The method comprises: a first receiver receiving a first information block, the first information block being used to configure a first search space set on a first serving cell; receiving a second information block, the second information block being used for determining a first time domain resource set; and monitoring in a first time window PDCCHs in the first search space set, or, in the first time window, abandoning monitoring of the PDCCHs in the first search space set, wherein whether the behavior of monitoring in the first time window the PDCCHs in the first search space set is executed depends on whether a first condition is satisfied. The method improves the system flexibility and transmission performance.

## Description

### Technical Field

The present application relates to a transmission method and apparatus in a wireless communication system, in particular to a transmission method and apparatus for wireless signals in a wireless communication system supporting a cellular network.

### Background Art

Network Energy Saving (NES) is of great significance for environmental sustainability, reduction of impacts on the environment (greenhouse gas emissions), and saving of operating costs. With the popularity of 5G (the 5th Generation Partnership Project) in industries and geographic regions, very high data rates are required to handle more advanced services and applications (such as XR), resulting in increasingly dense networks, and the use of more antennas, larger bandwidths, and more frequency bands. In order to keep the impact of 5G on the environment within a controllable range, new solutions need to be studied to improve network energy saving. Therefore, the RAN#94 meeting of 3GPP (the 3rd Generation Partnership Project) approved a study item (SI) of "Study on network energy savings" to study technical enhancements in aspects of time domains, frequency domains, spatial domains, power domains, etc. Among them, discontinuous transmission (DTX) is a method for studying network energy saving.

In an existing NR (New Radio) system, spectrum resources are statically divided into an FDD (Frequency Division Duplexing) spectrum and a TDD (Time Division Duplexing) spectrum. For the TDD spectrum, a base station and user equipment are both operated in a half-duplexing mode. This half-duplexing mode avoids a self-interference and can alleviate the impact of a cross-link interference, but it also brings about a decrease in resource utilization rate and an increase in latency. In view of these problems, supporting a flexible duplexing mode on the TDD spectrum or the FDD spectrum has become a possible solution. At the #103e meeting of 3GPP RAN (Radio Access Network) 1, studying work for a duplexing technology was agreed. Therein, subband non-overlapping full duplex (SBFD) was proposed, i.e., a base station device is supported to simultaneously perform sending and reception on two subbands.

### Summary of the Invention

The inventor has found through studies that whether to abandon monitoring PDCCHs (Physical Downlink Control Channels) in some time domain resources is an important issue.

In view of the above problem, the present application discloses a solution. It should be noted that in the description of the present application, network energy saving and flexible duplexing modes are only taken as two typical application scenarios or examples. The present application can also be applied to non-energy saving application scenarios (including but not limited to capacity enhancement systems, short-range communication systems, unlicensed frequency domain communications, IoT (Internet of Things), URLLC (Ultra Reliable Low Latency Communication) networks, Internet of Vehicles, etc.), and application scenarios in a half-duplexing mode (including but not limited to TDD, FDD, etc.). Further, the use of a unified design scheme for different scenarios (including but not limited to network energy saving scenarios, non-energy saving scenarios, SBFD modes, other flexible duplexing modes, full-duplexing modes, variable link direction modes, traditional duplexing modes, half-duplexing modes, etc.) also helps to reduce hardware complexity and costs. In the absence of conflicts, embodiments and features in the embodiments in any node of the present application can be applied to any other node. In the absence of conflicts, the embodiments and features in the embodiments of the present application can be arbitrarily combined with each other.

As one embodiment, interpretations of terminologies in the present application refer to definitions provided in the TS38 series of the 3GPP specifications.

As one embodiment, the interpretations of the terminologies in the present application refer to definitions in the specification protocol TS37 series of 3GPP.

The present application discloses a method used in a first node for wireless communication, characterized by comprising:
receiving a first information block, the first information block being used for configuring a first search space set on a first serving cell;
receiving a second information block, the second information block being used for determining a first time domain resource set; and
monitoring in a first time window PDCCHs (Physical Downlink Control Channels) in the first search space set, or, in a first time window, abandoning monitoring of PDCCHs in the first search space set, the monitoring being a detection for a DCI (Downlink Control Information) format in which a CRC (Cyclic Redundancy Check) is scrambled by an RNTI in a first RNTI (Radio Network Temporary Identifier) set, a first RNTI set consisting of one or more RNTIs, the first time window belonging to the first time domain resource set, and the first time window comprising at least one PDCCH candidate in the first search space set,
wherein whether a behavior of monitoring in the first time window the PDCCHs in the first search space set is executed depends on whether a first condition is satisfied; and the first condition comprises the first search space set being used for a beam failure recovery request response, or, the first condition comprises the first node monitoring in the first time window the beam failure recovery request response.

As one embodiment, the problem to be solved by the present application comprises: how to determine a condition that whether to abandon monitoring PDCCHs in some time domain resources.

As one embodiment, the problem to be solved by the present application comprises: how to determine whether the behavior of monitoring in the first time window the PDCCHs in the first search space set is executed according to the first condition.

As one embodiment, benefits of the above method comprise: flexibly determining whether the behavior is executed by determining an appropriate first condition, thereby improving the flexibility of system implementation.

As one embodiment, the benefits of the above method comprise: maintaining a beam failure recovery process, preserving the quality of a communication link, and improving the reliability of communication transmission.

As one embodiment, the benefits of the above method comprise: the behavior of monitoring in the first time window the PDCCHs in the first search space set is executed, so that failed beams can be recovered in time, thereby reducing a delay of communication transmission.

As one embodiment, the benefits of the above method comprise: ensuring the service quality of a communication system.

According to one aspect of the present application, it is characterized in that the first condition comprises the first search space set being used for the beam failure recovery request response; and when the first search space set is used for the beam failure recovery request response, the behavior of monitoring in the first time window the PDCCHs in the first search space set is executed.

As one embodiment, the benefits of the above method comprise: the above method supports the execution of a beam failure recovery process in the first time domain resource set, thereby reducing a transmission delay caused by beam failure.

According to one aspect of the present application, it is characterized in that the first condition comprises the first node monitoring in the first time window the beam failure recovery request response; and when the first node monitors in the first time window the beam failure recovery request response, the behavior of monitoring in the first time window the PDCCHs in the first search space set is executed.

As one embodiment, the benefits of the above method comprise: reducing a transmission delay.

As one embodiment, the benefits of the above method comprise: improving the robustness of transmission.

According to one aspect of the present application, it is characterized by comprising:
sending in a first slot a first random access preamble,
wherein the first random access preamble is used for a beam failure recovery request; and a response to the beam failure recovery request is an RAR (Random Access Response) for the first random access preamble, the RAR for the first random access preamble is monitored in a first response time window, a starting slot of the first response time window depends on the first slot, and the first time window belongs to the first response time window.

As one embodiment, the benefits of the above method comprise: reducing a transmission delay, and promoting the performance of communication.

According to one aspect of the present application, it is characterized in that the beam failure recovery request response comprises PDCCHs in a search space set used for monitoring the beam failure recovery request response for the first serving cell.

According to one aspect of the present application, it is characterized in that the beam failure recovery request response comprises a first-type PDCCH in a search space set used for the beam failure recovery request response for the first serving cell, and the first-type PDCCH satisfies that a CRC in a DCI format is scrambled by an RNTI in the first RNTI set.

According to one aspect of the present application, it is characterized in that the beam failure recovery request response comprises a BFR RAR for the first serving cell.

As one embodiment, the benefits of the above method comprise: recovering the link quality and ensuring the system stability by monitoring the beam failure recovery request response.

According to one aspect of the present application, it is characterized by comprising:
receiving a third information block;
wherein the third information block indicates a first index, and the first index is used for identifying a search space set for the beam failure recovery request response for the first serving cell; and only when an index of the first search space set is the first index, the first search space set is used for monitoring a response to the beam failure recovery request for the first serving cell therein.

As one embodiment, the benefits of the above method comprise: avoiding misdetection of the beam failure recovery request response for the first serving cell, and ensuring transmission consistency between communicating parties.

According to one aspect of the present application, it is characterized in that a first counter is used for counting beam failure event indications for the first serving cell; and when a value of the first counter is equal to or greater than a first threshold, beam failure recovery for the first serving cell is triggered.

As one embodiment, the benefits of the above method comprise: avoiding frequent triggering of beam failure events.

As one embodiment, the benefits of the above method comprise: avoiding false alarms of beam failure.

As one embodiment, the benefits of the above method comprise: ensuring the stability of communication.

The present application discloses a method used in a second node for wireless communication, characterized by comprising:
sending a first information block, the first information block being used for configuring a first search space set on a first serving cell; and
sending a second information block, the second information block being used for determining a first time domain resource set;
wherein a recipient of the first information block monitors in a first time window PDCCHs in the first search space set, or, a recipient of the first information block abandons monitoring in a first time window PDCCHs in the first search space set; the monitoring is a detection for a DCI format in which a CRC is scrambled by an RNTI in a first RNTI set; the first RNTI set consists of one or more RNTIs; the first time window belongs to the first time domain resource set, and the first time window comprises at least one PDCCH candidate in the first search space set; whether a behavior of monitoring in the first time window the PDCCHs in the first search space set is executed depends on whether a first condition is satisfied; and the first condition comprises the first search space set being used for a beam failure recovery request response, or, the first condition comprises a first node monitoring in the first time window the beam failure recovery request response.

According to one aspect of the present application, it is characterized in that the first condition comprises the first search space set being used for the beam failure recovery request response; and when the first search space set is used for the beam failure recovery request response, the behavior of monitoring in the first time window the PDCCHs in the first search space set is executed.

According to one aspect of the present application, it is characterized in that the first condition comprises the first node monitoring in the first time window the beam failure recovery request response; and when the first node monitors in the first time window the beam failure recovery request response, the behavior of monitoring in the first time window the PDCCHs in the first search space set is executed.

According to one aspect of the present application, it is characterized by comprising:
receiving in a first slot a first random access preamble;
wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

According to one aspect of the present application, it is characterized in that the beam failure recovery request response comprises PDCCHs in a search space set used for monitoring the beam failure recovery request response for the first serving cell.

According to one aspect of the present application, it is characterized in that the beam failure recovery request response comprises a first-type PDCCH in a search space set used for the beam failure recovery request response for the first serving cell, and the first-type PDCCH satisfies that a CRC in a DCI format is scrambled by an RNTI in the first RNTI set.

According to one aspect of the present application, it is characterized in that the beam failure recovery request response comprises a BFR RAR for the first serving cell.

According to one aspect of the present application, it is characterized by comprising:
sending a third information block;
wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

According to one aspect of the present application, it is characterized in that a first counter is used for counting beam failure event indications for the first serving cell; and when a value of the first counter is equal to or greater than a first threshold, beam failure recovery for the first serving cell is triggered.

The present application discloses a first node device for wireless communication, characterized by comprising:
a first receiver receiving a first information block, the first information block being used for configuring a first search space set on a first serving cell;
receiving a second information block, the second information block being used for determining a first time domain resource set; and
monitoring in a first time window PDCCHs in the first search space set, or, in a first time window, abandoning monitoring of PDCCHs in the first search space set, the monitoring being a detection for a DCI format in which a CRC is scrambled by an RNTI in a first RNTI set, the first RNTI set consisting of one or more RNTIs, the first time window belonging to the first time domain resource set, and the first time window comprising at least one PDCCH candidate in the first search space set;
wherein whether a behavior of monitoring in the first time window the PDCCHs in the first search space set is executed depends on whether a first condition is satisfied; and the first condition comprises the first search space set being used for a beam failure recovery request response, or, the first condition comprises a first node monitoring in the first time window the beam failure recovery request response.

The present application discloses a second node device for wireless communication, characterized by comprising:
a second transmitter sending a first information block, the first information block being used for configuring a first search space set on a first serving cell; and
sending a second information block, the second information block being used for determining a first time domain resource set;
wherein a recipient of the first information block monitors in a first time window PDCCHs in the first search space set, or, a recipient of the first information block abandons monitoring in a first time window PDCCHs in the first search space set; the monitoring is a detection for a DCI format in which a CRC is scrambled by an RNTI in a first RNTI set; the first RNTI set consists of one or more RNTIs; the first time window belongs to the first time domain resource set, and the first time window comprises at least one PDCCH candidate in the first search space set; whether a behavior of monitoring in the first time window the PDCCHs in the first search space set is executed depends on whether a first condition is satisfied; and the first condition comprises the first search space set being used for a beam failure recovery request response, or, the first condition comprises a first node monitoring in the first time window a beam failure recovery request response.

As one embodiment, compared with a traditional solution, the present application has the following advantages:
- improving the flexibility of system implementation;
- improving the reliability of communication transmission;
- reducing a delay of communication transmission; and
- ensuring the service quality of a communication system.

### Brief Description of the Drawings

Other features, purposes and advantages of the present application will become more apparent by reading the detailed description of the non-limiting embodiments with reference to the following drawings:
FIG. 1 shows a flowchart of a first information block and a second information block according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless transmission according to one embodiment of the present application;
FIG. 6 shows a schematic diagram of whether to monitor in a first time window PDCCHs in a first search space set according to one embodiment of the present application;
FIG. 7 shows a schematic diagram of whether to monitor in a first time window PDCCHs in a first search space set according to yet another embodiment of the present application;
FIG. 8 shows a schematic diagram of a first random access preamble according to one embodiment of the present application;
FIGs. 9A-9C show schematic diagrams of a beam failure recovery request response respectively according to one embodiment of the present application;
FIG. 10 shows a schematic diagram of a third information block according to one embodiment of the present application;
FIG. 11 shows a schematic diagram of beam failure recovery for a first serving cell according to one embodiment of the present application;
FIG. 12 shows a structural block diagram of a processing apparatus used in a first node device according to one embodiment of the present application; and
FIG. 13 shows a structural block diagram of a processing apparatus used in a second node device according to one embodiment of the present application.

### Detailed Description of Embodiments

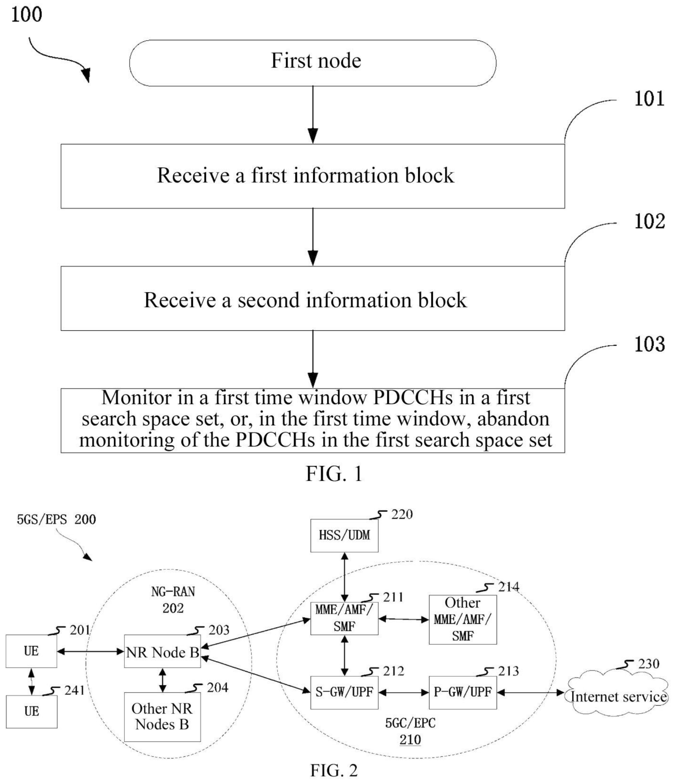

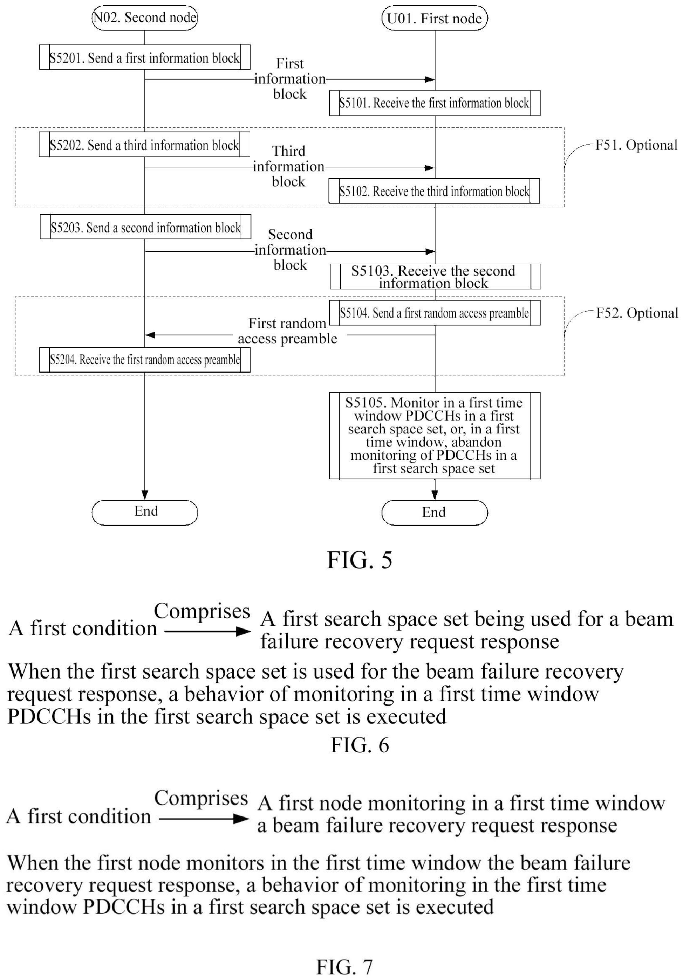

The technical solutions of the present application will be further explained in detail below in conjunction with drawings. It should be noted that, in the absence of conflicts, embodiments and features in the embodiments in the present application may be arbitrarily combined with each other. Based on considerations of flexibility, complexity, cost, compatibility, etc., those skilled in the art are motivated to flexibly combine the embodiments in different drawings without conflict, such as (but not limited to) the embodiment in FIG. 1 and the embodiments in FIG. 5-FIG. 11, the embodiment in FIG. 5 and the embodiments in FIG. 6-FIG. 11, etc.

### Embodiment 1

Embodiment 1 illustrates a flowchart of a first information block and a second information block according to one embodiment of the present application, as shown in FIG. 1. In 100 shown in FIG. 1, each block represents one step.

In Embodiment 1, a first node in the present application receives the first information block in step 101, the first information block being used for configuring a first search space set on a first serving cell; receives the second information block in step 102, the second information block being used for determining a first time domain resource set; and monitors in a first time window PDCCHs in the first search space set, or, in a first time window, abandons monitoring of PDCCHs in the first search space set in step 103, the monitoring being monitoring of a DCI format in which a CRC is scrambled by an RNTI in a first RNTI set, the first RNTI set consisting of one or more RNTIs, the first time window belonging to the first time domain resource set, and the first time window comprising at least one PDCCH candidate in the first search space set, wherein whether a behavior of monitoring in the first time window the PDCCHs in the first search space set is executed depends on whether a first condition is satisfied; and the first condition comprises the first search space set being used for a beam failure recovery request response, or, the first condition comprises the first node monitoring in the first time window a beam failure recovery request response.

As one embodiment, the first information block is borne by higher layer signaling.

As one embodiment, the first information block is borne by RRC (Radio Resource Control) signaling.

As one embodiment, the first information block comprises part of fields of one IE (Information Element).

As one embodiment, the first information block comprises all fields of one IE.

As one embodiment, the first information block comprises one IE or a plurality of IEs.

As one embodiment, the first information block comprises one IE.

As one embodiment, the first information block comprises one IE, a name of which comprises "SearchSpace".

As one embodiment, the first information block comprises one IE SearchSpace.

As one embodiment, a specific definition of IE SearchSpace refers to Chapter 6.3.2 of 3GPP TS38.331.

As one embodiment, the first information block comprises all or part of fields in each IE among a plurality of IEs.

As one embodiment, the first information block is used for configuring the first search space set on the first serving cell by a recipient of the first information block.

As one embodiment, the first information block is used for configuring the first search space set on the first serving cell by the first node.

As one embodiment, the first information block comprises configuration information of the first search space set.

As one embodiment, configuration information of the first search space set comprises at least an index of the first search space set, an associated CORESET (COntrol REsource SET), and periodicity and offset of PDCCH monitoring.

As one embodiment, configuration information of the first search space set comprises at least an index of the first search space set, an associated CORESET (COntrol REsource SET), periodicity and offset of PDCCH monitoring, and a PDCCH monitoring pattern within a slot.

As one embodiment, configuration information of the first search space set comprises at least an index of the first search space set, an associated CORESET (COntrol REsource SET), periodicity and offset of PDCCH monitoring, a PDCCH monitoring pattern within a slot, and a duration indicating the number of slots in which the first search space set exists.

As one embodiment, configuration information of the first search space set comprises at least an index of the first search space set, an associated CORESET (COntrol REsource SET), periodicity and offset of PDCCH monitoring, a PDCCH monitoring pattern within a slot, a duration indicating the number of slots in which the first search space set exists, and the number of PDCCH candidates for each CCE (Control Channel Element) aggregation level.

As one embodiment, configuration information of the first search space set comprises at least an index of the first search space set, an associated CORESET (COntrol REsource SET), periodicity and offset of PDCCH monitoring, a PDCCH monitoring pattern within a slot, a duration indicating the number of slots in which the first search space set exists, the number of PDCCH candidates for each CCE (Control Channel Element) aggregation level, and an indication that the type of the first search space set is either a CSS (Common Search Space) or a USS (UE-specific Search Space).

As one embodiment, configuration information of the first search space set comprises at least an index of the first search space set, an associated CORESET (COntrol REsource SET), periodicity and offset of PDCCH monitoring, a PDCCH monitoring pattern within a slot, a duration indicating the number of slots in which the first search space set exists, the number of PDCCH candidates for each CCE (Control Channel Element) aggregation level, an indication that the type of the first search space set is either a CSS (Common Search Space) or a USS (UE-specific Search Space), and an index of another search space set linked to the first search space set.

As one embodiment, configuration information of the above specifically refers to Chapter 10.1 of 3GPP TS 38.213.

As one embodiment, the first serving cell is one serving cell.

As one embodiment, the first serving cell is a PCell (Primary Cell).

As one embodiment, the first serving cell is a PSCell (Primary Secondary cell group Cell).

As one embodiment, the first serving cell is an SpCell (Special Cell).

As one embodiment, the first serving cell is an SCell (Secondary Cell).

As one embodiment, the first search space set is one search space set on the first serving cell.

As one embodiment, the first search space set is a search space set used for the beam failure recovery request response, or, the first search space set is not a search space set used for the beam failure recovery request response.

As one embodiment, the first search space set is a search space set used for the beam failure recovery request response, or, the first search space set is one search space set other than a search space set used for the beam failure recovery request response.

As one embodiment, the first search space set is a search space set used for the beam failure recovery request response, or, the first search space set is different from a second search space set, and the second search space set is a search space set used for the beam failure recovery request response.

As one embodiment, the second search space set is a search space set used for the beam failure recovery request response; and the first search space set is the same as the second search space set, or, the first search space set is different from the second search space set.

As one embodiment, the first search space set is configured for a DCI format in which a CRC is scrambled by an RNTI in the first RNTI set.

As one embodiment, the first search space set is configured for a DCI format in which a CRC is scrambled by at least an RNTI in the first RNTI set.

As one embodiment, the first search space set is one of one Type1A-PDCCH CSS set, one Type3-PDCCH CSS set, or one USS set.

As one embodiment, the first search space set is one CSS (Common Search Space) set.

As one embodiment, the first search space set is one USS (UE-specific Search Space) set.

As one embodiment, the first search space set is one Type1A-PDCCH CSS set.

As one embodiment, the first search space set is one Type3-PDCCH CSS set.

As one embodiment, specific definitions of the Type1A-PDCCH CSS set, the Type3-PDCCH CSS set, and the USS set refer to Chapter 10.1 of 3GPP TS38.213.

As one embodiment, the second information block is used for determining the first time domain resource set by a recipient of the second information block.

As one embodiment, the second information block is used for determining the first time domain resource set by the first node.

As one embodiment, the first time domain resource set comprises a DTX non-active duration of the first serving cell.

As one embodiment, the first time domain resource set does not belong to a DTX active duration of the first serving cell.

As one embodiment, any time domain resource in the first time domain resource set does not belong to the DTX active duration of the first serving cell.

As one embodiment, any part of time domain resources in the first time domain resource set does not belong to the DTX active duration of the first serving cell.

As one embodiment, the first time domain resource set consists of at least one symbol other than the DTX active duration of the first serving cell.

As one embodiment, the first time domain resource set consists of a plurality of symbols other than the DTX active duration of the first serving cell.

As one embodiment, the first time domain resource set consists of at least one slot other than the DTX active duration of the first serving cell.

As one embodiment, the first time domain resource set consists of a plurality of slots other than the DTX active duration of the first serving cell.

As one embodiment, the first time domain resource set consists of at least one subframe other than the DTX active duration of the first serving cell.

As one embodiment, the first time domain resource set consists of a plurality of subframes other than the DTX active duration of the first serving cell.

As one embodiment, the second information block is borne by higher layer signaling.

As one embodiment, the second information block is borne by at least one of RRC signaling, MAC (Medium Access Control) layer signaling, or physical layer signaling.

As one embodiment, the second information block is borne by at least one of the RRC signaling or the MAC (Medium Access Control) layer signaling.

As one embodiment, the second information block is borne by at least one of the RRC signaling or the physical layer signaling.

As one embodiment, the second information block is borne by the MAC (Medium Access Control) layer signaling or the physical layer signaling.

As one embodiment, the second information block is borne by a MAC CE (Control Element).

As one embodiment, the second information block comprises a MAC PDU (Protocol Data Unit).

As one embodiment, the second information block comprises a MAC subheader.

As one embodiment, the second information block comprises a MAC CE.

As one embodiment, the second information block comprises DCI (Downlink Control Information).

As one embodiment, the second information block is DCI.

As one embodiment, a physical layer channel occupied by the second information block comprises a PDCCH (Physical Downlink Control Channel).

As one embodiment, the second information block is borne by cell-specific signaling.

As one embodiment, the second information block is borne by cell-specific higher layer signaling.

As one embodiment, the second information block is borne by cell-specific DCI signaling.

As one embodiment, the second information block is cell-specific.

As one embodiment, the second information block is borne by UE-group common signaling.

As one embodiment, the second information block is borne by UE-group common higher layer signaling.

As one embodiment, the second information block is UE-group common DCI.

As one embodiment, the second information block is UE-group common.

As one embodiment, the second information block is borne by UE-specific signaling.

As one embodiment, the second information block is borne by UE-specific higher layer signaling.

As one embodiment, the second information block is UE-specific DCI.

As one embodiment, the second information block is UE-specific.

As one embodiment, the second information block indicates the first time domain resource set.

As one embodiment, the second information block explicitly indicates the first time domain resource set.

As one embodiment, the second information block implicitly indicates the first time domain resource set.

As one embodiment, the second information block directly indicates the first time domain resource set.

As one embodiment, the second information block indirectly indicates the first time domain resource set.

As one embodiment, the second information block is used for activating the first time domain resource set.

As one embodiment, the second information block indicates a second time domain resource set, and the first time domain resource set comprises at least one symbol other than the second time domain resource set.

As one embodiment, the second information block indicates the second time domain resource set, and the first time domain resource set comprises a plurality of symbols other than the second time domain resource set.

As one embodiment, the second information block indicates the second time domain resource set, and the first time domain resource set comprises at least one slot other than the second time domain resource set.

As one embodiment, the second information block indicates the second time domain resource set, and the first time domain resource set comprises a plurality of slots other than the second time domain resource set.

As one embodiment, the second information block indicates the second time domain resource set, and the first time domain resource set comprises at least one subframe other than the second time domain resource set.

As one embodiment, the second information block indicates the second time domain resource set, and the first time domain resource set comprises a plurality of subframes other than the second time domain resource set.

As one embodiment, "the second information block indicates a second time domain resource set" refers to: the second information block explicitly indicates the second time domain resource set.

As one embodiment, "the second information block indicates a second time domain resource set" refers to: the second information block implicitly indicates the second time domain resource set.

As one embodiment, "the second information block indicates a second time domain resource set" refers to: the second information block directly indicates the second time domain resource set.

As one embodiment, "the second information block indicates a second time domain resource set" refers to: the second information block indirectly indicates the second time domain resource set.

As one embodiment, the second information block indicates a third time domain resource set, and the first time domain resource set comprises at least one symbol other than the third time domain resource set.

As one embodiment, the second information block indicates the third time domain resource set, and the first time domain resource set comprises a plurality of symbols other than the third time domain resource set.

As one embodiment, the second information block indicates the third time domain resource set, and the first time domain resource set comprises at least one slot other than the third time domain resource set.

As one embodiment, the second information block indicates the third time domain resource set, and the first time domain resource set comprises a plurality of slots other than the third time domain resource set.

As one embodiment, the second information block indicates the third time domain resource set, and the first time domain resource set comprises at least one subframe other than the third time domain resource set.

As one embodiment, the second information block indicates the third time domain resource set, and the first time domain resource set comprises a plurality of subframes other than the third time domain resource set.

As one embodiment, "the second information block indicates a third time domain resource set" refers to: the second information block explicitly indicates the third time domain resource set.

As one embodiment, "the second information block indicates a third time domain resource set" refers to: the second information block implicitly indicates the third time domain resource set.

As one embodiment, "the second information block indicates a third time domain resource set" refers to: the second information block directly indicates the third time domain resource set.

As one embodiment, "the second information block indicates a third time domain resource set" refers to: the second information block indirectly indicates the third time domain resource set.

As one embodiment, the second information block activates the second time domain resource set, and the first time domain resource set comprises at least one symbol other than the second time domain resource set.

As one embodiment, the second information block activates the second time domain resource set, and the first time domain resource set comprises a plurality of symbols other than the second time domain resource set.

As one embodiment, the second information block activates the second time domain resource set, and the first time domain resource set comprises at least one slot other than the second time domain resource set.

As one embodiment, the second information block activates the second time domain resource set, and the first time domain resource set comprises at least one subframe other than the second time domain resource set.

As one embodiment, the second information block activates the third time domain resource set, and the first time domain resource set comprises at least one symbol other than the third time domain resource set.

As one embodiment, the second information block activates the third time domain resource set, and the first time domain resource set comprises at least a plurality of symbols other than the third time domain resource set.

As one embodiment, the second information block activates the third time domain resource set, and the first time domain resource set comprises at least one slot other than the third time domain resource set.

As one embodiment, the second information block activates the third time domain resource set, and the first time domain resource set comprises at least one subframe other than the third time domain resource set.

As one embodiment, the first time domain resource set is configured or indicated to transmission of an uplink signal or an uplink channel.

As one embodiment, the second information block comprises DCI for scheduling a PUSCH, the second information block indicates the first time domain resource set, and the first time domain resource set is indicated to the PUSCH.

As one embodiment, the second information block comprises DCI for scheduling the PDSCH, the second information block indicates the first time domain resource set, and the first time domain resource set is indicated to a PUCCH for feeding back an HARQ-ACK for the PDSCH.

As one embodiment, the second information block is used for configuring or triggering a CSI (Channel State Information) feedback, and the first time domain resource set is configured or indicated to the CSI feedback.

As one embodiment, the second information block is used for configuring or triggering sending of an SRS (Sounding Reference Signal), and the first time domain resource set is configured or indicated to the SRS.

As one embodiment, the first time domain resource set is configured or indicated to a PRACH.

As one embodiment, the first time domain resource set is configured or indicated to a random access preamble.

As one embodiment, the first time domain resource set is configured or indicated to an Msg1.

As one embodiment, the first time domain resource set is configured or indicated to an Msg3.

As one embodiment, the second information block comprises part of or all information in an RAR (Random Access Response) uplink grant, and the first time domain resource set is configured or indicated to a PUSCH scheduled by the RAR uplink grant.

As one embodiment, the first time domain resource set is configured or indicated to an MsgA.

As one embodiment, a method used in the first node comprises:
monitoring in the first time window the PDCCHs in the first search space set, and abandoning sending in the first time window the uplink signal or the uplink channel; or, in the first time window, abandoning monitoring of the PDCCHs in the first search space set, and sending in the first time window the uplink signal or the uplink channel,
wherein the first time domain resource set is configured or indicated to transmission of the uplink signal or the uplink channel.

As one embodiment, a first receiver monitors in the first time window the PDCCHs in the first search space set, and a first transmitter abandons sending in the first time window the uplink signal or the uplink channel; or, the first receiver abandons monitoring in the first time window the PDCCHs in the first search space set, and the first transmitter sends in the first time window the uplink signal or the uplink channel, wherein the first time domain resource set is configured or indicated to transmission of the uplink signal or the uplink channel.

As one embodiment, the uplink channel comprises at least one of a PUSCH, a PUCCH, or a PRACH.

As one embodiment, the uplink signal comprises at least one of an SRS, or a random access preamble.

As one embodiment, one random access process comprises: RA resource selection, RA preamble transmission, RAR reception, and contention resolution.

As one embodiment, one random access process comprises one of a 4-step random access process or a 2-step random access process.

As one embodiment, one 4-step random access process comprises at least: transmission of an RA preamble (the Msg1), and an RAR message (an Msg2) with a PDCCH/PDSCH.

As one embodiment, one 4-step random access process comprises: transmission of an RA preamble (the Msg1), an RAR message (the Msg2) with a PDCCH/PDSCH, transmission of the PUSCH scheduled by the RAR uplink (UL) grant, and a PDSCH for contention resolution.

As one embodiment, one 2-step random access process comprises at least: transmission of an RA preamble and a PUSCH (the MsgA), and reception of an RAR message (an MsgB).

As one embodiment, one 2-step random access process comprises: transmission of an RA preamble and a PUSCH (the MsgA), reception of an RAR message (the MsgB), transmission of a PUSCH scheduled by a fallback RAR uplink grant, and the PDSCH for contention resolution.

As one embodiment, the first time domain resource set comprises at least one symbol.

As one embodiment, the first time domain resource set comprises a plurality of symbols.

As one embodiment, the first time domain resource set comprises at least one slot.

As one embodiment, the first time domain resource set comprises at least one subframe.

As one embodiment, the first time domain resource set comprises a positive integer number of continuous symbols.

As one embodiment, the first time domain resource set comprises periodically distributed symbol groups, and one symbol group comprises one or more symbols.

As one embodiment, the first time domain resource set comprises non-periodically distributed symbol groups, and one symbol group comprises one or more symbols.

As one embodiment, the first time domain resource set comprises periodically distributed slots.

As one embodiment, the first time domain resource set comprises periodically distributed slot groups, and one slot group comprises one or more slots.

As one embodiment, the first time domain resource set comprises non-periodically distributed slots.

As one embodiment, the first time domain resource set comprises non-periodically distributed slot groups, and one slot group comprises one or more slots.

As one embodiment, the first time domain resource set comprises periodically distributed subframes.

As one embodiment, the first time domain resource set comprises periodically distributed subframe groups, and one subframe group comprises one or more subframes.

As one embodiment, the first time domain resource set comprises non-periodically distributed subframes.

As one embodiment, the first time domain resource set comprises non-periodically distributed subframe groups, and one subframe group comprises one or more subframes.

As one embodiment, the first time domain resource set is configured or indicated to discontinuous transmission (DTX) of the first serving cell.

As one embodiment, the first time domain resource set comprises a DTX inactive time of the first serving cell.

As one embodiment, the first time domain resource set does not belong to a DTX active time of the first serving cell.

As one embodiment, the first time domain resource set is configured or indicated for discontinuous transmission (DTX) of the first serving cell.

As one embodiment, a sender of the second information block may perform downlink (DL) sending during the DTX active time of the first serving cell.

As one embodiment, the first node performs downlink reception during the DTX active time of the first serving cell.

As one embodiment, the first node receives at least a UE-specific PDSCH (Physical Downlink Shared Channel) and a UE-specific PDCCH during the DTX active time of the first serving cell.

As one embodiment, the sender of the second information block stops sending part of or all UE-specific PDSCHs during the DTX inactive time of the first serving cell.

As one embodiment, the sender of the second information block stops sending partial types of channels or signals during the DTX active time of the first serving cell during the DTX inactive time of the first serving cell.

As one embodiment, the partial types of channels or signals comprise at least one of a PDCCH, a PDSCH, and a CSI-RS (Channel State Information-reference signal).

As one embodiment, the partial types of channels or signals comprise a PDCCH.

As one embodiment, the partial types of channels or signals comprise a PDSCH.

As one embodiment, the partial types of channels or signals comprise at least one of CSI-RSs.

As one embodiment, the sender of the second information block stops sending a UE-specific PDSCH scheduled by PDCCHs in a search space set other than the second search space set of the first serving cell during the DTX inactive time of the first serving cell.

As one embodiment, the first node stops receiving part of or all UE-specific PDSCHs during the DTX inactive time of the first serving cell.

As one embodiment, the first node stops receiving partial types of channels or signals during the DTX active time of the first serving cell during the DTX inactive time of the first serving cell.

As one embodiment, the first node stops receiving UE-specific PDSCHs scheduled by PDCCHs in a search space set other than the second search space set of the first serving cell during the DTX inactive time of the first serving cell.

As one embodiment, the sender of the second information block stops sending UE-specific PDCCHs in part of or all search space sets during the DTX inactive time of the first serving cell.

As one embodiment, the sender of the second information block stops sending UE-specific PDCCHs in a search space set other than the second search space set of the first serving cell during the DTX inactive time of the first serving cell, and the second search space set is a search space set used for a response to a beam failure recovery request for the first serving cell.

As one embodiment, the first node stops monitoring at least UE-specific PDCCHs in part of or all search space sets during the DTX inactive time of the first serving cell.

As one embodiment, the first node stops monitoring UE-specific PDCCHs in a search space set other than the second search space set of the first serving cell during the DTX inactive time of the first serving cell, and the second search space set is a search space set used for the response to the beam failure recovery request of the first serving cell.

As one embodiment, the sender of the second information block stops downlink sending during the DTX inactive time of the first serving cell.

As one embodiment, the sender of the second information block enters an energy saving mode during the DTX inactive time of the first serving cell.

As one embodiment, the sender of the second information block performs downlink sending in a time domain resource other than the first time domain resource set of the first serving cell.

As one embodiment, the first node receives at least a UE-specific PDSCH and a UE-specific PDCCH in a time domain resource other than the first time domain resource set of the first serving cell.

As one embodiment, the sender of the second information block stops sending part of or all UE-specific PDSCHs in the first time domain resource set of the first serving cell.

As one embodiment, the first node stops receiving part of or all UE-specific PDSCHs in the first time domain resource set of the first serving cell.

As one embodiment, the sender of the second information block stops sending partial types of channels or signals in a time domain resource other than the first time domain resource set of the first serving cell in the first time domain resource set of the first serving cell.

As one embodiment, the first node stops receiving partial types of channels or signals in a time domain resource other than the first time domain resource set of the first serving cell in the first time domain resource set of the first serving cell.

As one embodiment, the sender of the second information block stops sending UE-specific (specific) PDSCHs scheduled by PDCCHs in a search space set other than the second search space set of the first serving cell in the first time domain resource set of the first serving cell.

As one embodiment, the first node stops receiving UE-specific PDSCHs scheduled by PDCCHs in a search space set other than the second search space set of the first serving cell in the first time domain resource set of the first serving cell.

As one embodiment, the sender of the second information block stops sending UE-specific PDCCHs in part of or all search space sets in the first time domain resource set of the first serving cell.

As one embodiment, the sender of the second information block stops sending UE-specific PDCCHs in a search space set other than the second search space set of the first serving cell in the first time domain resource set of the first service cell, and the second search space set is a search space set used for the response to the beam failure recovery request for the first serving cell.

As one embodiment, the first node stops monitoring at least UE-specific PDCCHs in part of or all search space sets in the first time domain resource set of the first serving cell.

As one embodiment, the first node stops monitoring UE-specific PDCCHs in a search space set other than the second search space set of the first serving cell in the first time domain resource set of the first serving cell, and the second search space set is a search space set used for the response to the beam failure recovery request for the first serving cell.

As one embodiment, the sender of the second information block stops downlink sending in the first time domain resource set of the first serving cell.

As one embodiment, the sender of the second information block enters an energy saving mode in the first time domain resource set of the first serving cell.

As one embodiment, the downlink sending comprises sending an SSB (Synchronization Signal Block).

As one embodiment, the downlink sending comprises sending an SS/PBCH (Synchronization Signal/Physical Broadcast Channel) block.

As one embodiment, the downlink sending comprises sending a CSI-RS (Channel State Information-Reference Signal).

As one embodiment, the downlink sending comprises dynamically scheduled downlink transmission.

As one embodiment, the downlink sending comprises UE-specific downlink transmission.

As one embodiment, the downlink sending comprises part of UE-specific downlink transmission.

As one embodiment, the downlink sending comprises a dynamically scheduled PDSCH.

As one embodiment, the downlink sending comprises part of dynamically scheduled PDSCHs.

As one embodiment, the downlink sending comprises a UE-specific PDSCH.

As one embodiment, the downlink sending comprises part of UE-specific PDSCHs.

As one embodiment, the downlink sending comprises sending at least one of an SSB, a CSI-RS, dynamically scheduled downlink transmission, UE-specific downlink transmission, a dynamically scheduled PDSCH, or a UE-specific PDSCH.

As one embodiment, the second information block is used for determining that the sender of the second information block enters a first state.

As one sub-embodiment of this embodiment, characteristics of the first state comprise the sender of the second information block stopping part of or all data transmission based on dynamic scheduling in the first time domain resource set.

As one sub-embodiment of this embodiment, the characteristics of the first state comprise the sender of the second information block stopping downlink sending in the first time domain resource set, and the downlink sending comprises part of or all UE-specific PDSCHs.

As one sub-embodiment of this embodiment, the first state comprises a DTX state.

As one sub-embodiment of this embodiment, the first state comprises an energy saving state.

As one embodiment, a UE-specific PDSCH is a PDSCH scheduled by a UE-specific PDCCH.

As one embodiment, a UE-specific PDSCH is a PDSCH identified by a UE-specific RNTI.

As one embodiment, a UE-specific PDSCH satisfies: being scrambled by an RNTI in the first RNTI set.

As one embodiment, a UE-specific PDSCH satisfies: being scrambled by a UE-specific RNTI.

As one embodiment, the first time window comprises one PDCCH monitoring occasion for the first search space set.

As one embodiment, the first time window comprises at least one PDCCH monitoring occasion for the first search space set.

As one embodiment, the first time window comprises a plurality of PDCCH monitoring occasions for the first search space set.

As one embodiment, the first time window comprises one or more symbols.

As one embodiment, the first time window comprises a plurality of symbols.

As one embodiment, the first time window comprises a plurality of continuous symbols.

As one embodiment, the first time window comprises one or more slots.

As one embodiment, the first time window comprises one slot.

As one embodiment, the first time window comprises a plurality of slots.

As one embodiment, the first time window comprises a plurality of continuous slots.

As one embodiment, the first time window comprises part of time domain resources in the first time domain resource set.

As one embodiment, the first time window is the first time domain resource set.

As one embodiment, the first time window belongs to the first time domain resource set.

As one embodiment, "the monitoring is a detection for a DCI format in which a CRC is scrambled by an RNTI in a first RNTI set" comprises: the monitoring is not for a detection of a DCI format in which a CRC is scrambled by any RNTI other than the first RNTI set.

As one embodiment, "the monitoring is a detection for a DCI format in which a CRC is scrambled by an RNTI in a first RNTI set" comprises: the monitoring is for PDCCHs of an RNTI in the first RNTI set.

As one embodiment, "the monitoring is a detection for a DCI format in which a CRC is scrambled by an RNTI in a first RNTI set" comprises: monitoring PDCCHs for an RNTl in the first RNTI set.

As one embodiment, "the monitoring is a detection for a DCI format in which a CRC is scrambled by an RNTI in a first RNTI set" comprises: monitoring PDCCHs for a DCI format in which a CRC is scrambled by an RNTI in the first RNTI set.

As one embodiment, "the monitoring is a detection for a DCI format in which a CRC is scrambled by an RNTI in a first RNTI set" comprises: monitoring PDCCHs to detect a DCI format in which a CRC is scrambled by an RNTI in the first RNTI set.

As one embodiment, "the monitoring is a detection for a DCI format in which a CRC is scrambled by an RNTI in a first RNTI set" comprises: monitoring PDCCHs in order to detect a DCI format in which a CRC is scrambled by an RNTI in the first RNTI set.

As an embodiment, "the monitoring is a detection for a DCI format in which a CRC is scrambled by an RNTI in a first RNTI set" comprises: receiving PDCCH candidates and decoding according to a DCI format in which a CRC is scrambled by an RNTI in the first RNTI set.

As one embodiment, "the monitoring is a detection for a DCI format in which a CRC is scrambled by an RNTI in a first RNTI set" comprises: decoding signals received in PDCCH candidates according to a DCI format in which a CRC is scrambled by an RNTI in the first RNTI set.

As one embodiment, "monitoring in the first time window the PDCCHs in the first search space set" comprises: monitoring in the first time window PDCCH candidates in the first search space set.

As one embodiment, "monitoring in the first time window the PDCCHs in the first search space set" comprises: monitoring in the first time window the PDCCHs in the first search space set for an RNTI in the first RNTI set.

As one embodiment, "monitoring in the first time window the PDCCHs in the first search space set" comprises: monitoring in the first time window the PDCCHs in the first search space set for an RNTI in the first RNTI set.

As one embodiment, "monitoring in the first time window the PDCCHs in the first search space set" comprises: monitoring in the first time window a first-type PDCCH in the first search space set; and the first-type PDCCH satisfies: a CRC in a DCI format is scrambled by an RNTI in the first RNTI set.

As one embodiment, "monitoring in the first time window the PDCCHs in the first search space set" comprises: monitoring in the first time window the PDCCHs in the first search space set for a DCI format in which a CRC is scrambled by an RNTI in the first RNTI set.

As one embodiment, "monitoring in the first time window the PDCCHs in the first search space set" comprises: monitoring in the first time window the PDCCHs in the first search space set to detect a DCI format in which a CRC is scrambled by an RNTI in the first RNTI set.

As one embodiment, "monitoring in the first time window the PDCCHs in the first search space set" comprises: monitoring in the first time window the PDCCHs in the first search space set in order to detect a DCI format in which a CRC is scrambled by an RNTI in the first RNTI set.

As one embodiment, "monitoring in the first time window the PDCCHs in the first search space set" comprises: in the first time window, receiving the PDCCH candidates in the first search space set and decoding according to a DCI format in which a CRC is scrambled by an RNTI in the first RNTI set.

As one embodiment, "monitoring in the first time window the PDCCHs in the first search space set" comprises: in the first time window, decoding signals received in the PDCCH candidates in the first search space set according to a DCI format in which a CRC is scrambled by an RNTI in the first RNTI set.

As one embodiment, "in the first time window, abandoning monitoring of the PDCCHs in the first search space set" comprises: abandoning monitoring in the first time window the PDCCH candidates in the first search space set.

As one embodiment, "in the first time window, abandoning monitoring of the PDCCHs in the first search space set" comprises: abandoning receiving in the first time window the PDCCH candidates in the first search space set.

As one embodiment, "in the first time window, abandoning monitoring of the PDCCHs in the first search space set" comprises: abandoning monitoring in the first time window the PDCCHs in the first search space set for an RNTI in the first RNTI set.

As one embodiment, "in the first time window, abandoning monitoring of the PDCCHs in the first search space set" comprises: abandoning monitoring in the first time window the PDCCHs in the first search space set for an RNTI in the first RNTI set.

As one embodiment, "in the first time window, abandoning monitoring of the PDCCHs in the first search space set" comprises: in the first time window, abandoning monitoring the PDCCHs in the first search space set for a DCI format in which a CRC is scrambled by an RNTI in the first RNTI set.

As one embodiment, "in the first time window, abandoning monitoring of the PDCCHs in the first search space set" comprises: abandoning monitoring in the first time window the PDCCHs in the first search space set to detect a DCI format in which a CRC is scrambled by an RNTI in the first RNTI set.

As one embodiment, "in the first time window, abandoning monitoring of the PDCCHs in the first search space set" comprises: in the first time window, abandoning monitoring the PDCCHs in the first search space set in order to detect a DCI format in which a CRC is scrambled by an RNTI in the first RNTI set.

As one embodiment, "in the first time window, abandoning monitoring of the PDCCHs in the first search space set" comprises: in the first time window, abandoning receiving the PDCCH candidates in the first search space set and abandoning decoding according to a DCI format in which a CRC is scrambled by an RNTI in the first RNTI set.

As one embodiment, "in the first time window, abandoning monitoring of the PDCCHs in the first search space set" comprises: in the first time window, abandoning decoding signals received in the PDCCH candidates in the first search space set according to a DCI format in which a CRC is scrambled by an RNTI in the first RNTI set.

As one embodiment, "in the first time window, abandoning monitoring of the PDCCHs in the first search space set" comprises: abandoning monitoring in the first time window the first-type PDCCH in the first search space set; and the first-type PDCCH satisfies: a CRC in a DCI format is scrambled by an RNTI in the first RNTI set.

As one embodiment, a PDCCH in the first search space set monitored in the first time window is identified by an RNTI in the first RNTI set.

As one embodiment, the meaning of "abandoning monitoring" refers to: not monitoring.

As one embodiment, the meaning of "abandoning monitoring" refers to: not being required to monitor.

As one embodiment, the meaning of "abandoning monitoring" refers to: not being required to monitor, and whether the first node monitors is implementation-dependent.

As one embodiment, the first RNTI (Radio Network Temporary Identifier) set comprises a C-RNTI (Cell RNTI) and an MCS-C-RNTI (Modulation and Coding Scheme Cell RNTI).

As one embodiment, the first RNTI set consists of one or more UE-specific RNTIs.

As one embodiment, the first RNTI set consists of a plurality of UE-specific RNTIs.

As one embodiment, a C-RNTI is one UE-specific RNTI.

As one embodiment, an MCS-C-RNTI is one UE-specific RNTI.

As one embodiment, a CS-RNTI (Configured Scheduling RNTI) is one UE-specific RNTI.

As one embodiment, a PDCCH identified by an RNTI in the first RNTI set is UE-specific.

As one embodiment, a UE-specific PDCCH is a PDCCH identified by a UE-specific RNTI.

As one embodiment, a PDCCH in which a CRC in a DCI format is scrambled by an RNTI in the first RNTI set is UE-specific.

As one embodiment, a UE-specific PDCCH satisfies: a CRC in a DCI format is scrambled by a UE-specific RNTI.

As one embodiment, one UE-specific RNTI is at least one of the C-RNTI, the MCS-C-RNTI, or the CS-RNTI.

As one embodiment, the C-RNTI, the MCS-C-RNTI and the CS-RNTI are all UE-specific RNTIs.

As one embodiment, the C-RNTI, the MCS-C-RNTI and the CS-RNTI specifically refer to Chapter 7 of 3GPP TS 38.321.

As one embodiment, "whether a behavior of monitoring in the first time window the PDCCHs in the first search space set is executed depends on whether a first condition is satisfied" refers to: whether to monitor in the first time window the PDCCHs in the first search space set depends on whether the first condition is satisfied.

As one embodiment, "whether to monitor in the first time window the PDCCHs in the first search space set depends on whether a first condition is satisfied" refers to: whether to monitor in the first time window the PDCCHs in the first search space set depends on whether there exists one condition among N conditions that is satisfied, the first condition is one of the N conditions, and N is a positive integer greater than 1.

As one sub-embodiment of the above embodiment, only when there exists one condition among the N conditions that is satisfied, the behavior of monitoring in the first time window the PDCCHs in the first search space set is executed.

As one sub-embodiment of the above embodiment, when there exists one condition among the N conditions that is satisfied, the behavior of monitoring in the first time window the PDCCHs in the first search space set is executed; and when none of the N conditions are satisfied, in the first time window, the monitoring of the PDCCHs in the first search space set is abandoned.

As one embodiment, "whether to monitor in the first time window the PDCCHs in the first search space set depends on whether a first condition is satisfied" refers to: whether to monitor in the first time window the PDCCHs in the first search space set depends on whether the N conditions are all satisfied, the first condition is one of the N conditions, and N is a positive integer greater than 1.

As one sub-embodiment of the above embodiment, only when the N conditions are all satisfied, the behavior of monitoring in the first time window the PDCCHs in the first search space set is executed.

As one sub-embodiment of the above embodiment, when the N conditions are all satisfied, the behavior of monitoring in the first time window the PDCCHs in the first search space set is executed; and when none of the N conditions are satisfied, in the first time window, the monitoring of the PDCCHs in the first search space set is abandoned.

As one sub-embodiment of the above embodiment, when the N conditions are all satisfied, the behavior of monitoring in the first time window the PDCCHs in the first search space set is executed; and when there exists at least one condition among the N conditions that is not satisfied, in the first time window, the monitoring of the PDCCHs in the first search space set is abandoned.

As one embodiment, the N conditions comprise at least one of the following two conditions:
- the first search space set is used for the beam failure recovery request response; and
- the first node monitors in the first time window the beam failure recovery request response.

As one embodiment, the N conditions comprise only one of the following two conditions:
- the first search space set is used for the beam failure recovery request response; and
- the first node monitors in the first time window the beam failure recovery request response.

As one embodiment, the N conditions comprise the first condition and a second condition; and the second condition comprises receiving a first higher layer parameter, a value of the first higher layer parameter belongs to a first candidate value set, and the first candidate value set comprises at least one candidate value.

As one sub-embodiment of the above embodiment, the first higher layer parameter is an RRC parameter.

As one sub-embodiment of the above embodiment, the first candidate value set comprises at least one candidate value.

As one sub-embodiment of the above embodiment, the first candidate value set comprises enabled.

As one sub-embodiment of the above embodiment, the first candidate value set comprises disabled.

As one sub-embodiment of the above embodiment, the first candidate value set comprises configured.

As one sub-embodiment of the above embodiment, the first candidate value set comprises true.

As one sub-embodiment of the above embodiment, the first candidate value set comprises 1.

As one sub-embodiment of the above embodiment, the first candidate value set comprises 0.

As one embodiment, "whether to monitor in the first time window the PDCCHs in the first search space set depends on whether a first condition is satisfied" refers to: when the first condition is satisfied, the behavior of monitoring in the first time window the PDCCHs in the first search space set is executed.

As one embodiment, "whether to monitor in the first time window the PDCCHs in the first search space set depends on whether a first condition is satisfied" refers to: when the first condition is not satisfied, in the first time window, the monitoring of the PDCCHs in the first search space set is abandoned.

As one embodiment, "whether to monitor in the first time window the PDCCHs in the first search space set depends on whether a first condition is satisfied" refers to: when the first condition is not satisfied, whether to monitor in the first time window the PDCCHs in the first search space set depends on whether there exists one condition other than the first condition among the N conditions that is satisfied, the first condition is one of the N conditions, and N is a positive integer greater than 1; when there exists one condition other than the first condition among the N conditions that is satisfied, the behavior of monitoring in the first time window the PDCCHs in the first search space set is executed; and when none of the N conditions are satisfied, in the first time window, the monitoring of the PDCCHs in the first search space set is abandoned.

As one embodiment, "whether to monitor in the first time window the PDCCHs in the first search space set depends on whether a first condition is satisfied" refers to: only when the first condition is satisfied, the behavior of monitoring in the first time window the PDCCHs in the first search space set is executed.

As one embodiment, the first condition comprises the first search space set being used for the beam failure recovery request response.

As one embodiment, "the first search space set being used for a beam failure recovery request response" refers to: the first search space set is used for sending the response to the beam failure recovery request therein by a sender of the first information block.

As one embodiment, "the first search space set being used for a beam failure recovery request response" refers to: the first search space set is used for monitoring the beam failure recovery request response therein by the first node.

As one embodiment, "the first search space set being not used for a beam failure recovery request response" refers to: the first search space set is not used for monitoring the beam failure recovery request response therein by the first node.

As one embodiment, "the first search space set being not used for a beam failure recovery request response" refers to: the first search space set is one search space set other than a search space set used for the beam failure recovery request response.

As one embodiment, "the first search space set being not used for a beam failure recovery request response" refers to: the first search space set is not used for monitoring a BFR (Beam Failure Recovery) RAR (Random Access Response) therein by the first node.

As one embodiment, "the first search space set being not used for a beam failure recovery request response" refers to: the first search space set is not used for monitoring the BFR RAR for the first serving cell therein by the first node.

As one embodiment, "the first search space set being used for a beam failure recovery request response" refers to: the first search space set is used for sending the BFR RAR therein by the sender of the first information block.

As one embodiment, "the first search space set being used for a beam failure recovery request response" refers to: the first search space set is used for sending the BFR RAR for the first serving cell therein by the sender of the first information block.

As one embodiment, "the first search space set being used for a beam failure recovery request response" refers to: the first search space set is used for sending the response to the beam failure recovery request for the first serving cell therein by the sender of the first information block.

As one embodiment, "the first search space set being used for a beam failure recovery request response" refers to: the first search space set is used for monitoring the response to the beam failure recovery request for the first serving cell therein by the first node.

As one embodiment, "the first search space set being not used for a beam failure recovery request response" refers to: the first search space set is not used for monitoring the response to the beam failure recovery request for the first serving cell therein by the first node.

As one embodiment, "the first search space set being used for a beam failure recovery request response" refers to: the first search space set is used for sending the BFR RAR therein by the sender of the first information block.

As one embodiment, "the first search space set being used for a beam failure recovery request response" refers to: the first search space set is used for sending the BFR RAR for the first serving cell therein by the sender of the first information block.

As one embodiment, the first condition comprises the first node monitoring in the first time window the beam failure recovery request response.

As one embodiment, the beam failure recovery request response is transmitted on a PDCCH in a search space set used for the beam failure recovery request response.

As one embodiment, the beam failure recovery request response is the response to the beam failure recovery request.

As one embodiment, the beam failure recovery request response is a PDCCH in a search space set used for the beam failure recovery request response.

As one embodiment, the beam failure recovery request response is transmitted on PDCCHs in a search space set used for monitoring the response to the beam failure recovery request for the first serving cell.

As one embodiment, the beam failure recovery request response is a PDCCH in a search space set used for monitoring the response to the beam failure recovery request for the first serving cell.

As one embodiment, the beam failure recovery request response is the first-type PDCCH in a search space set used for the beam failure recovery request response; and the first-type PDCCH satisfies: a CRC in a DCI format is scrambled by an RNTI in the first RNTI set.

As one embodiment, the beam failure recovery request response is the first-type PDCCH in a search space set used for the beam failure recovery request response for the first serving cell; and the first-type PDCCH satisfies: a CRC in a DCI format is scrambled by an RNTI in the first RNTI set.

As one embodiment, the beam failure recovery request response is the BFR RAR.

As one embodiment, the beam failure recovery request response is the BFR RAR for the first serving cell.

As one embodiment, one PDCCH occupies one PDCCH candidate.

As one embodiment, one PDCCH is one PDCCH candidate.

As one embodiment, one PDCCH is transmitted on one PDCCH candidate.

As one embodiment, a PDCCH candidate specifically refers to Chapter 10 of 3GPP TS 38.213.

As one embodiment, one CORESET comprises a plurality of REs (Resource Elements).

As one embodiment, an RE specifically refers to Chapter 4 of 3GPP TS 38.211.

Typically, one resource element occupies one subcarrier in a frequency domain, and occupies one symbol in a time domain.

As one embodiment, the symbol is a single-carrier symbol.

As one embodiment, the symbol is a multi-carrier symbol.

As one embodiment, the multi-carrier symbol is an OFDM (Orthogonal Frequency Division Multiplexing) symbol.

As one embodiment, the symbol is obtained after output of transform precoding undergoes OFDM symbol generation.

As one embodiment, the symbol is an SC-FDMA (Single Carrier-Frequency Division Multiple Access) symbol.

As one embodiment, the symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, one CORESET comprises at least one CCE (Control Channel Element).

As one embodiment, one CCE comprises 9 REGs (Resource Element Groups), and one REG comprises 4 REs.

As one embodiment, one CCE comprises 6 REGs, and one REG comprises 12 REs.

As one embodiment, one CORESET is configured by one RRC IE.

As one embodiment, one CORESET is configured by an RRC IE ControlResourceSet.

As one embodiment, a specific definition of the CORESET refers to Chapter 10 of 3GPP TS 38.213.

As one embodiment, a specific definition of the CCE refers to Chapter 7.3.2 of 3GPP TS 38.211.

As one embodiment, a specific definition of the RRC IE ControlResourceSet refers to Chapter 6.3.2 of 3GPP TS 38.331.

As one embodiment, any PDCCH candidate in one search space set consists of at least one CCE of a CORESET associated with the one search space set.

As one embodiment, any PDCCH candidate in one search space set belongs to a CORESET associated with the one search space set.

As one embodiment, one search space set is associated with one CORESET.

As one embodiment, the meaning of "one search space set is associated with one CORESET" comprises: configuration information of the one search space set comprises an index of the one CORESET.

As one embodiment, one CORESET corresponds to at least one search space (SS) set.

As one embodiment, one search space set corresponding to one CORESET is a USS set or a CSS set.

As one embodiment, a PDCCH candidate in one CORESET belongs to the one CORESET in a frequency domain.

As one embodiment, one PDCCH candidate in one CORESET is one PDCCH candidate in a search space set corresponding to the one CORESET.

As one embodiment, one PDCCH candidate in one CORESET consists of at least one CCE in the one CORESET.

As one embodiment, any PDCCH candidate in a search space set corresponding to one CORESET consists of at least one CCE of the one CORESET.

As one embodiment, one PDCCH candidate in a search space set corresponding to one CORESET belongs to the one CORESET.

As one embodiment, the meaning of a phrase of "a search space set corresponding to one CORESET" comprises: a search space set corresponding to one CORESET is associated with the one CORESET.

As one embodiment, the meaning of the phrase of "a search space set corresponding to one CORESET" comprises: one CORESET is used for determining a time frequency resource occupied by a search space set corresponding to the one CORESET in one PDCCH monitoring occasion.

As one embodiment, the meaning of the phrase of "a search space set corresponding to one CORESET" comprises: one CORESET comprises the time frequency resource occupied by a search space set corresponding to the one CORESET in one PDCCH monitoring occasion.

As one embodiment, the meaning of the phrase of "a search space set corresponding to one CORESET" comprises: an RE occupied by one CORESET comprises an RE occupied by a search space set corresponding to the one CORESET in one PDCCH monitoring occasion.

As one embodiment, the meaning of the phrase of "a search space set corresponding to one CORESET" comprises: an RB (Resource Block) occupied by one CORESET in a frequency domain comprises an RB occupied by a search space set corresponding to one CORESET in a frequency domain.

As one embodiment, the meaning of the phrase of "a search space set corresponding to one CORESET" comprises: a frequency domain resource occupied by one CORESET comprises the frequency domain resource occupied by a search space set corresponding to the one CORESET.

As one embodiment, the meaning of the phrase of "a search space set corresponding to one CORESET" comprises: symbols occupied by one CORESET are used for determining symbols occupied by a search space set corresponding to the one CORESET in one PDCCH monitoring occasion.

As one embodiment, the meaning of the phrase "a search space set corresponding to one CORESET" comprises: symbols occupied by one CORESET comprise symbols occupied by a search space set corresponding to the one CORESET in one PDCCH monitoring occasion.

As one embodiment, symbols occupied by one PDCCH monitoring occasion in one CORESET belong to symbols occupied by the one CORESET.

As one embodiment, symbols occupied by one PDCCH monitoring occasion in one CORESET comprise symbols occupied by the one CORESET.

As one embodiment, the meaning of the phrase "a search space set corresponding to one CORESET" comprises: configuration information of a search space set corresponding to one CORESET comprises an index of the one CORESET.

As one embodiment, the meaning of the phrase "a search space set corresponding to one CORESET" comprises: a search space set corresponding to one CORESET is a search space set to which an index of the one CORESET is configured.

As one embodiment, one PDCCH monitoring occasion comprises one time period.

As one embodiment, one PDCCH monitoring occasion comprises one or more symbols.

As one embodiment, one PDCCH monitoring occasion comprises a plurality of symbols.

As one embodiment, one PDCCH monitoring occasion comprises one symbol.

As one embodiment, one PDCCH monitoring occasion comprises one or more slots.

As one embodiment, one PDCCH monitoring occasion comprises one slot.

As one embodiment, one PDCCH monitoring occasion comprises a plurality of slots.

As one embodiment, one PDCCH monitoring occasion comprises one sub-slot.

As one embodiment, one PDCCH monitoring occasion comprises one subframe.

### Embodiment 2

Embodiment 2 illustrates a schematic diagram of a network architecture according to one embodiment of the present application, as shown in FIG. 2.

FIG. 2 explains a network architecture 200 of LTE (Long-Term Evolution), LTE-A (Long-Term Evolution Advanced), and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but for simplicity, these entities/interfaces are not shown. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B(gNB)203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function)211, other MME/AMF/SMF214, an S-GW (Service Gateway)/UPF (User Plane Function)212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted by the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, a first node in the present application comprises the UE201.

As one embodiment, the first node in the present application comprises the UE241.

As one embodiment, a second node in the present application comprises the gNB203.

As one embodiment, the UE201 supports Energy Saving on a base station side.

As one embodiment, the UE201 supports the reception of cell DRX.

As one embodiment, the gNB203 supports Energy Saving on a base station side.

As one embodiment, the gNB203 supports sending of cell DTX.

### Embodiment 3

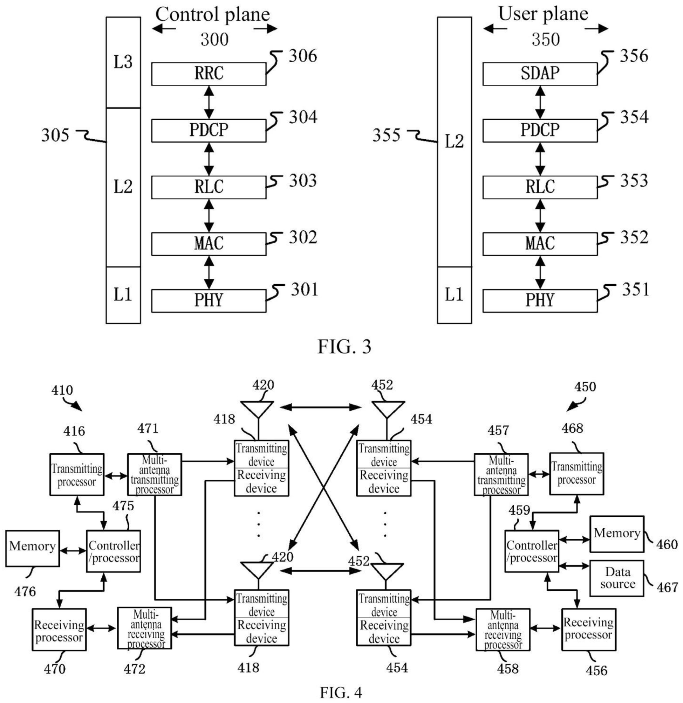

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of one wireless protocol architecture for a user plane and a control plane according to the present application, as shown in FIG. 3. FIG. 3 is a schematic diagram explaining an embodiment of a radio protocol architecture for a user plane 350 and a control plane 300. FIG. 3 shows the radio protocol architecture of the control plane 300 used between a first communication node device (UE, a gNB, or an RSU in V2X) and a second communication node device (a gNB, UE, or an RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301, and is responsible for a link between the first communication node device and the second communication node device or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to a first node in the present application.

As one embodiment, the wireless protocol architecture in FIG. 3 is applicable to a second node in the present application.

As one embodiment, the higher layer in the present application refers to a layer above a physical layer.

As one embodiment, a first information block is generated in the RRC sublayer 306.

As one embodiment, the first information block is generated in the MAC sublayer 302 or the MAC sublayer 352.

As one embodiment, the first information block set is generated in the PHY301 or a PHY351.

As one embodiment, a second information block is generated in the RRC sublayer 306.

As one embodiment, the second information block is generated in the MAC sublayer 302 or the MAC sublayer 352.

As one embodiment, the second information block is generated in the PHY301 or the PHY351.

As one embodiment, a third information block is generated in the RRC sublayer 306.

As one embodiment, a first random access preamble is generated in the PHY301 or the PHY351.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements the functionality of an L2 layer. In a DL, the controller/processor 475 provides header compression, encryption, packet segmentation and reordering, multiplexing between logical and transport channels, and radio resource assignment to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or frequency domain, and then uses an inverse fast Fourier transform (IFFT) to produce a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operation. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any parallel stream destined for the second communication device 450. Symbols on each parallel stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the DL (DownLink), the controller/processor 459 provides demultiplexing between transport and logical channels, packet reassembly, decryption, header decompression, and control signal processing to recover the upper layer data packets from the core network. The upper layer data packets are then provided to all protocol layers above the L2 layer. Various control signals may also be provided to an L3 for L3 processing. The controller/processor 459 is also responsible for error detection using an acknowledgment (ACK) and/or negative acknowledgment (NACK) protocol to support HARQ operations.

In transmission from the second communication device 450 to the first communication device 410, at the second communication device 450, the data source 467 is used for providing the upper layer data packets to the controller/processor 459. The data source 467 represents all protocol layers above the L2 layer. Similar to a sending function at the first communication device 410 described in the DL, the controller/processor 459 implements header compression, encryption, packet segmentation and reordering, and multiplexing between logical and transport channels based on the radio resource assignment of the first communication device 410, and implements functions of the L2 layer for the user plane and the control plane. The controller/processor 459 is also responsible for an HARQ operation and retransmission of a lost packet, and for signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. The controller/processor 475 provides demultiplexing between transport and logical channels, packet reassembly, decryption, header decompression, and control signal processing to recover upper layer data packets from the second communication device 450. The upper layer data packets from the controller/processor 475 can be provided to the core network. The controller/processor 475 is also responsible for error detection using the ACK and/or NACK protocol to support the HARQ operation.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives a first information block, the first information block being used for configuring a first search space set on a first serving cell; receives a second information block, the second information block being used for determining a first time domain resource set; and monitors in a first time window PDCCHs in the first search space set, or, in a first time window, abandons monitoring of PDCCHs in the first search space set, the monitoring being a detection for a DCI format in which a CRC is scrambled by an RNTI in a first RNTI set, the first RNTI set consisting of one or more RNTIs, the first time window belonging to the first time domain resource set, and the first time window comprising at least one PDCCH candidate in the first search space set, wherein whether a behavior of monitoring in the first time window the PDCCHs in the first search space set is executed depends on whether a first condition is satisfied; and the first condition comprises the first search space set being used for a beam failure recovery request response, or, the first condition comprises a first node monitoring in the first time window the beam failure recovery request response.

As one embodiment, the second communication device 450 comprises: a memory storing a computer-readable instruction program, the computer-readable instruction program generating actions when executed by at least one processor, the actions comprising: receiving the first information block, the first information block being used for configuring the first search space set on the first serving cell; receiving the second information block, the second information block being used for determining the first time domain resource set; and monitoring in the first time window the PDCCHs in the first search space set, or, in the first time window, abandoning monitoring of the PDCCHs in the first search space set, the monitoring being a detection for a DCI format in which a CRC is scrambled by an RNTI in the first RNTI set, the first RNTI set consisting of one or more RNTIs, the first time window belonging to the first time domain resource set, and the first time window comprising at least one PDCCH candidate in the first search space set, wherein whether the behavior of monitoring in the first time window the PDCCHs in the first search space set is executed depends on whether the first condition is satisfied; and the first condition comprises the first search space set being used for the beam failure recovery request response, or, the first condition comprises the first node monitoring in the first time window the beam failure recovery request response.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends the first information block, the first information block being used for configuring the first search space set on the first serving cell; and sends the second information block, the second information block being used for determining the first time domain resource set, a recipient of the first information block monitoring in the first time window the PDCCHs in the first search space set, or, a recipient of the first information block abandoning monitoring in the first time window the PDCCHs in the first search space set, the monitoring being a detection for a DCI format in which a CRC is scrambled by an RNTI in the first RNTI set, the first RNTI set consisting of one or more RNTIs, the first time window belonging to the first time domain resource set, and the first time window comprising at least one PDCCH candidate in the first search space set, wherein whether the behavior of monitoring in the first time window the PDCCHs in the first search space set is executed depends on whether the first condition is satisfied; and the first condition comprises the first search space set being used for the beam failure recovery request response, or, the first condition comprises the first node monitoring in the first time window the beam failure recovery request response.

As one embodiment, the first communication device 410 comprises: a memory storing a computer-readable instruction program, the computer-readable instruction program generating actions when executed by at least one processor, the actions comprising: sending the first information block, the first information block being used for configuring the first search space set on the first serving cell; and sending the second information block, the second information block being used for determining the first time domain resource set, the recipient of the first information block monitoring in the first time window the PDCCHs in the first search space set, or, the recipient of the first information block abandoning monitoring in the first time window the PDCCHs in the first search space set, the monitoring being a detection for a DCI format in which a CRC is scrambled by an RNTI in the first RNTI set, the first RNTI set consisting of one or more RNTIs, the first time window belonging to the first time domain resource set, and the first time window comprising at least one PDCCH candidate in the first search space set, wherein whether the behavior of monitoring in the first time window the PDCCHs in the first search space set is executed depends on whether the first condition is satisfied; and the first condition comprises the first search space set being used for the beam failure recovery request response, or, the first condition comprises the first node monitoring in the first time window the beam failure recovery request response.

As one embodiment, the first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving a third information block in the present application; and at least one of {the antenna 420, the transmitting device 418, the transmitting processor 416, the multi-antenna transmitting processor 471, the controller/processor 475, and the memory 476} is used for sending the third information block in the present application.

As one embodiment, at least one of {the antenna 452, the transmitting device 454, the transmitting processor 468, the multi-antenna transmitting processor 457, the controller/processor 459, and the memory 460} is used for sending a first random access preamble in the present application; and at least one of {the antenna 420, the receiving device 418, the receiving processor 470, the multi-antenna receiving processor 472, the controller/processor 475, and the memory 476} is used for receiving the first random access preamble in the present application.

### Embodiment 5

Embodiment 5 illustrates a flowchart of wireless transmission according to one embodiment of the present application, as shown in FIG. 5. In FIG. 5, a first node U01 and a second node N02 are two communication nodes transmitted through an air interface, respectively, wherein steps in a dotted block F51 and a dotted block F52 are optional, respectively.

For **the first node U01,** a first information block is received in step S5101; a third information block is received in step S5102; a second information block is received in step S5103; a first random access preamble is sent in step S5104; and PDCCHs in a first search space set are monitored in a first time window, or monitoring in a first time window PDCCHs in a first search space set is abandoned in step S5105.

For **the second node N02,** the first information block is sent in step S5201; the third information block is sent in step S5202; the second information block is sent in step S5203; and the first random access preamble is received in step S5204.

In Embodiment 5, the first information block is used for configuring the first search space set on a first serving cell; the second information block is used for determining a first time domain resource set; the first node U01 monitors in the first time window the PDCCHs in the first search space set, or, in the first time window, abandons monitoring of the PDCCHs in the first search space set; the monitoring is a detection for a DCI format in which a CRC is scrambled by an RNTI in a first RNTI set; the first RNTI set consists of one or more RNTIs; and the first time window belongs to the first time domain resource set, and the first time window comprises at least one PDCCH candidate in the first search space set, wherein whether a behavior of monitoring in the first time window the PDCCHs in the first search space set is executed depends on whether a first condition is satisfied; the first condition comprises the first search space set being used for a beam failure recovery request response, or, the first condition comprises a first node monitoring in the first time window a beam failure recovery request response; the third information block indicates a first index, and the first index is used for identifying a search space set for the beam failure recovery request response for the first serving cell; and the first random access preamble is used for a beam failure recovery request.

As one embodiment, a second transmitter sends in a first response time window an RAR for the first random access preamble.

As one embodiment, the second transmitter sends in the first time window the RAR for the first random access preamble.

As one embodiment, whether the second transmitter sends in the first response time window the RAR for the first random access preamble is implementation-dependent on a second node device.

As one embodiment, a method used in a second node comprises: sending in the first response time window the RAR for the first random access preamble.

As one embodiment, a method used in the second node comprises: sending in the first time window the RAR for the first random access preamble.

As one embodiment, whether the second node sends in the first response time window the RAR for the first random access preamble is implementation-dependent on the second node.

As one embodiment, the first node U01 is the first node in the present application.

As one embodiment, the second node N02 is the second node in the present application.

As one embodiment, an air interface between the second node N02 and the first node U01 comprises a wireless interface between a base station device and user equipment.

As one embodiment, the air interface between the second node N02 and the first node U01 comprises a wireless interface between a relay node device and user equipment.

As one embodiment, the air interface between the second node N02 and the first node U01 comprises a wireless interface between user equipment and user equipment.

As one embodiment, the second node N02 is a maintenance base station of a serving cell of the first node U01.

As one embodiment, the steps in the dotted block F51 do not exist.

As one embodiment, the steps in the dotted block F51 exist.

As one embodiment, the steps in the dotted block F52 do not exist.

As one embodiment, the steps in the dotted block F52 exist.

As one embodiment, the first information block is received not later than the second information block.

As one embodiment, the first information block is received earlier than the second information block.

As one embodiment, the second information block is received not later than the first information block.

As one embodiment, the second information block is received earlier than the first information block.

As one embodiment, the steps in the dotted block F51 exist, and the third information block is received not later than the first information block.

As one embodiment, the steps in the dotted block F51 exist, and the third information block is received earlier than the first information block.

As one embodiment, the steps in the dotted block F51 exist, and the third information block is received not earlier than the first information block.

As one embodiment, the steps in the dotted block F51 exist, and the third information block is received later than the first information block.

As one embodiment, the steps in the dotted block F51 exist, and the third information block is received not later than the second information block.

As one embodiment, the steps in the dotted block F51 exist, and the third information block is received earlier than the second information block.

As one embodiment, the steps in the dotted block F51 exist, and the third information block is received not earlier than the second information block.

As one embodiment, the steps in the dotted block F51 exist, and the third information block is received later than the second information block.

As one embodiment, the first information block is transmitted on the first serving cell.

As one embodiment, the second information block is transmitted on the first serving cell.

As one embodiment, the third information block is transmitted on the first serving cell.

As one embodiment, the first random access preamble is transmitted on the first serving cell.

As one embodiment, a physical channel occupied by transmitting the first information block comprises a PDSCH.

As one embodiment, a physical channel occupied by transmitting the second information block comprises a PDSCH.

As one embodiment, the physical channel occupied by transmitting the second information block comprises a PDCCH.

As one embodiment, a physical channel occupied by transmitting the third information block comprises a PDSCH.

As one embodiment, a physical channel occupied by transmitting the first random access preamble comprises a PRACH (Physical Random-access Channel).

### Embodiment 6

Embodiment 6 illustrates a schematic diagram of whether to monitor in a first time window PDCCHs in a first search space set according to one embodiment of the present application, as shown in FIG. 6.

In Embodiment 6, a first condition comprises the first search space set being used for a beam failure recovery request response; and when the first search space set is used for the beam failure recovery request response, a behavior of monitoring in the first time window the PDCCHs in the first search space set is executed.

As one embodiment, when the first search space set is used for the beam failure recovery request response, the behavior of monitoring in the first time window the PDCCHs in the first search space set is executed a first node.

As one embodiment, when the first search space set is not used for the beam failure recovery request response, in the first time window, the monitoring of the PDCCHs in the first search space set is abandoned.

As one embodiment, when the first search space set is not used for the beam failure recovery request response, in the first time window, the monitoring of the PDCCHs in the first search space set is abandoned by the first node.

As one embodiment, when the first search space set is not used for the beam failure recovery request response, the first node abandons monitoring in the first time window the PDCCHs in the first search space set.

As one embodiment, when the first search space set is not used for the beam failure recovery request response, the first node is not required to monitor in the first time window the PDCCHs in the first search space set.

As one embodiment, when the first search space set is not used for the beam failure recovery request response, whether the behavior of monitoring in the first time window the PDCCHs in the first search space set is executed is implementation-dependent on the first node.

As one embodiment, when the first search space set is not used for the beam failure recovery request response, whether the behavior of monitoring in the first time window the PDCCHs in the first search space set is executed depends on whether there exists one condition other than the first condition among N conditions that is satisfied, the first condition is one of the N conditions, and N is a positive integer greater than 1; when there exists one condition other than the first condition among the N conditions that is satisfied, the behavior of monitoring in the first time window the PDCCHs in the first search space set is executed; and when none of the N conditions are satisfied, in the first time window, the monitoring of the PDCCHs in the first search space set is abandoned.

As one embodiment, when the first search space set is one search space set other than a search space set used for the beam failure recovery request response, in the first time window, the monitoring of the PDCCHs in the first search space set is abandoned.

As one embodiment, when the first search space set is one search space set other than a search space set used for the beam failure recovery request response, in the first time window, the monitoring of the PDCCHs in the first search space set is abandoned by the first node.

As one embodiment, when the first search space set is one search space set other than a search space set used for the beam failure recovery request response, the first node abandons monitoring in the first time window the PDCCHs in the first search space set.

As one embodiment, when the first search space set is one search space set other than a search space set used for the beam failure recovery request response, the first node is not required to monitor in the first time window the PDCCHs in the first search space set.

As one embodiment, when the first search space set is one search space set other than a search space set used for the beam failure recovery request response, whether the behavior of monitoring in the first time window the PDCCHs in the first search space set is executed is implementation-dependent on the first node.

As one embodiment, when the first search space set is one search space set other than a search space set used for the beam failure recovery request response, whether the behavior of monitoring in the first time window the PDCCHs in the first search space set is executed depends on whether there exists one condition other than the first condition among the N conditions that is satisfied, the first condition is one of the N conditions, and N is a positive integer greater than 1; when there exists one condition other than the first condition among the N conditions that is satisfied, the behavior of monitoring in the first time window the PDCCHs in the first search space set is executed; and when none of the N conditions are satisfied, in the first time window, the monitoring of the PDCCHs in the first search space set is abandoned.

### Embodiment 7

Embodiment 7 illustrates a schematic diagram of whether to monitor in a first time window PDCCHs in a first search space set according to yet another embodiment of the present application, as shown in FIG. 7.

In Embodiment 7, a first condition comprises a first node monitoring in the first time window a beam failure recovery request response; and when the first node monitors in the first time window the beam failure recovery request response, a behavior of monitoring in the first time window the PDCCHs in the first search space set is executed.

As one embodiment, when the first node monitors in the first time window the beam failure recovery request response, the behavior of monitoring in the first time window the PDCCHs in the first search space set is executed by the first node.

As one embodiment, when the first node does not monitor in the first time window the beam failure recovery request response, monitoring in the first time window the PDCCHs in the first search space set is abandoned.

As one embodiment, when the first node does not monitor in the first time window the beam failure recovery request response, monitoring in the first time window the PDCCHs in the first search space set is abandoned by the first node.

As one embodiment, when the first node does not monitor in the first time window the beam failure recovery request response, in the first time window, the monitoring of the PDCCHs in the first search space set is abandoned.

As one embodiment, when the first node does not monitor in the first time window the beam failure recovery request response, the first node abandons monitoring in the first time window the PDCCHs in the first search space set.

As one embodiment, when the first node does not monitor in the first time window the beam failure recovery request response, the first node is not required to monitor in the first time window the PDCCHs in the first search space set.

As one embodiment, when the first node does not monitor in the first time window the beam failure recovery request response, whether the behavior of monitoring in the first time window the PDCCHs in the first search space set is executed is implementation-dependent on the first node.

As one embodiment, when the first node does not monitor in the first time window the beam failure recovery request response, whether the behavior of monitoring in the first time window the PDCCHs in the first search space set is executed depends on whether there exists one condition other than the first condition among N conditions that is satisfied, the first condition is one of the N conditions, and N is a positive integer greater than 1; when there exists one condition other than the first condition among the N conditions that is satisfied, the behavior of monitoring in the first time window the PDCCHs in the first search space set is executed; and when none of the N conditions are satisfied, in the first time window, the monitoring of the PDCCHs in the first search space set is abandoned.

As one embodiment, in the first time window, at least one PDCCH candidate in the first search space set overlaps with a reference frequency domain resource set in a frequency domain and overlaps with a reference time domain resource set in a time domain.

As one embodiment, the reference time domain resource set comprises one or more symbols.

As one embodiment, the reference time domain resource set comprises one symbol.

As one embodiment, the reference time domain resource set comprises a plurality of symbols.

As one embodiment, the reference time domain resource set comprises at least one slot.

As one embodiment, the reference time domain resource set comprises at least one subframe.

As one embodiment, the reference time domain resource set comprises symbols simultaneously used for both uplink (UL) transmission and downlink transmission.

As one embodiment, any symbol in the reference time domain resource set can be simultaneously used for the uplink transmission and the downlink transmission.

As one embodiment, any symbol in the reference time domain resource set is simultaneously used for the uplink transmission and the downlink transmission.

As one embodiment, at least one symbol in the reference time domain resource set is simultaneously used for the uplink transmission and the downlink transmission.

As one embodiment, the reference time domain resource set does not comprise symbols for transmission of a first-type downlink signal, and the first-type downlink signal comprises one or more of an SS/PBCH block, a CORESET with an index of 0, or an SIB (System Information Block).

As one embodiment, one or more RBs in one or more DL symbols in the reference time domain resource set is/are used for uplink transmission.

As one embodiment, one or more continuous RBs in one or more DL symbols in the reference time domain resource set is/are used for uplink transmission.

As one embodiment, each symbol in the reference time domain resource set is configured as a DL symbol by a higher layer parameter.

As one embodiment, each symbol in the reference time domain resource set is configured as a DL symbol or a Flexible symbol by a higher layer parameter.

As one embodiment, at least one symbol in the reference time domain resource set is configured as a DL symbol by a higher layer parameter.

As one embodiment, at least one symbol in the reference time domain resource set is configured as a Flexible symbol by a higher layer parameter.

As one embodiment, the reference time domain resource set is configured to one serving cell.

As one embodiment, the reference time domain resource set is configured to a first serving cell.

As one embodiment, the reference time domain resource set is configured to at least one BWP (BandWidth Part).

As one embodiment, the reference time domain resource set is configured to one BWP.

As one embodiment, the reference time domain resource set is configured to one DL BWP.

As one embodiment, the reference time domain resource set is configured to a DL BWP in the first serving cell.

As one embodiment, the higher layer parameter is carried by RRC signaling.

As one embodiment, the higher layer parameter comprises all or part of fields in one RRC IE.

As one embodiment, the higher layer parameter comprises all or part of fields in each RRC IE among a plurality of RRC IEs.

As one embodiment, the higher layer parameter comprises all or part of fields in a TDD-UL-DL-ConfigCommon IE.

As one embodiment, the higher layer parameter comprises all or part of fields in a TDD-UL-DL-ConfigDedicated IE.

As one embodiment, the higher layer parameter comprises all or part of fields in a ServingCellConfig IE.

As one embodiment, the higher layer parameter comprises all or part of fields in a ServingCellConfigCommonSIB IE.

As one embodiment, the higher layer parameter comprises all or part of fields in a ServingCellConfigCommon IE.

As one embodiment, the higher layer parameter is carried by at least one RRC IE.

As one embodiment, a name of one IE carrying the higher layer parameter comprises TDD-UL-DL-Config.

As one embodiment, the name of one IE carrying the higher layer parameter comprises ServingCellConfig.

As one embodiment, the uplink transmission in one or more DL symbols in the reference time domain resource set comprises at least one of a PUSCH (Physical Uplink Shared Channel), a PUCCH (Physical Uplink Control Channel), a PRACH, or an SRS (Sounding Reference Signal).

As one embodiment, the uplink transmission in one or more DL symbols in the reference time domain resource set comprises a PUSCH.

As one embodiment, the uplink transmission in one or more DL symbols in the reference time domain resource set comprises a PUCCH.

As one embodiment, the uplink transmission in one or more DL symbols in the reference time domain resource set comprises a PRACH.

As one embodiment, the uplink transmission in one or more DL symbols in the reference time domain resource set comprises an SRS.

As one embodiment, the reference frequency domain resource set comprises one or more RBs.

As one embodiment, the reference frequency domain resource set comprises a plurality of RBs.

As one embodiment, the reference frequency domain resource set comprises a plurality of continuous RBs.

As one embodiment, the reference frequency domain resource set comprises part of or all RBs of one BWP.

As one embodiment, the reference frequency domain resource set comprises part of RBs of one BWP.

As one embodiment, the reference frequency domain resource set comprises part of or all RBs of one DL BWP.

As one embodiment, the reference frequency domain resource set comprises part of RBs of one DL BWP.

As one embodiment, the reference frequency domain resource set comprises part of or all RBs of one serving cell.

As one embodiment, the reference frequency domain resource set comprises part of RBs of one serving cell.

As one embodiment, the reference frequency domain resource set comprises part of or all RBs of a BWP in one serving cell.

As one embodiment, the reference frequency domain resource set comprises part of RBs of a BWP in one serving cell.

As one embodiment, the reference frequency domain resource set comprises part of or all RBs of the first serving cell.

As one embodiment, the reference frequency domain resource set comprises part of RBs of the first serving cell.

As one embodiment, on one serving cell, uplink transmission in one or more DL symbols in the reference time domain resource set belongs to the reference frequency domain resource set in a frequency domain.

As one embodiment, on one BWP, uplink transmission in one or more DL symbols in the reference time domain resource set belongs to the reference frequency domain resource set in a frequency domain.

As one embodiment, on one DL BWP, uplink transmission in one or more DL symbols in the reference time domain resource set belongs to the reference frequency domain resource set in a frequency domain.

As one embodiment, on the first serving cell, uplink transmission in one or more DL symbols in the reference time domain resource set belongs to the reference frequency domain resource set in a frequency domain.

As one embodiment, on one BWP in the first serving cell, uplink transmission in one or more DL symbols in the reference time domain resource set belongs to the reference frequency domain resource set in a frequency domain.

As one embodiment, on one DL BWP in the first serving cell, uplink transmission in one or more DL symbols in the reference time domain resource set belongs to the reference frequency domain resource set in a frequency domain.

As one embodiment, in the first time window, at least one PDCCH candidate in the first search space set overlaps with the reference frequency domain resource set in a frequency domain and overlaps with the reference time domain resource set in a time domain, and when the first node monitors in the first time window the beam failure recovery request response, the behavior of monitoring in the first time window the PDCCHs in the first search space set is executed.

As one embodiment, in the first time window, at least one PDCCH candidate in the first search space set overlaps with the reference frequency domain resource set in a frequency domain and overlaps with the reference time domain resource set in a time domain, and when the first node monitors in the first time window the beam failure recovery request response, the behavior of monitoring in the first time window the PDCCHs in the first search space set is executed by the first node.

As one embodiment, benefits of the above method comprise: in an energy saving mode, reducing or avoiding the impact on monitoring of the beam failure recovery request response.

As one embodiment, the benefits of the above method comprise: in a flexible duplexing mode, reducing the impact on monitoring of the beam failure recovery request response.

As one embodiment, the benefits of the above method comprise: in an SBFD mode, increasing the opportunity to monitor the beam failure recovery request response, and reducing the impact of beam failure.

### Embodiment 8

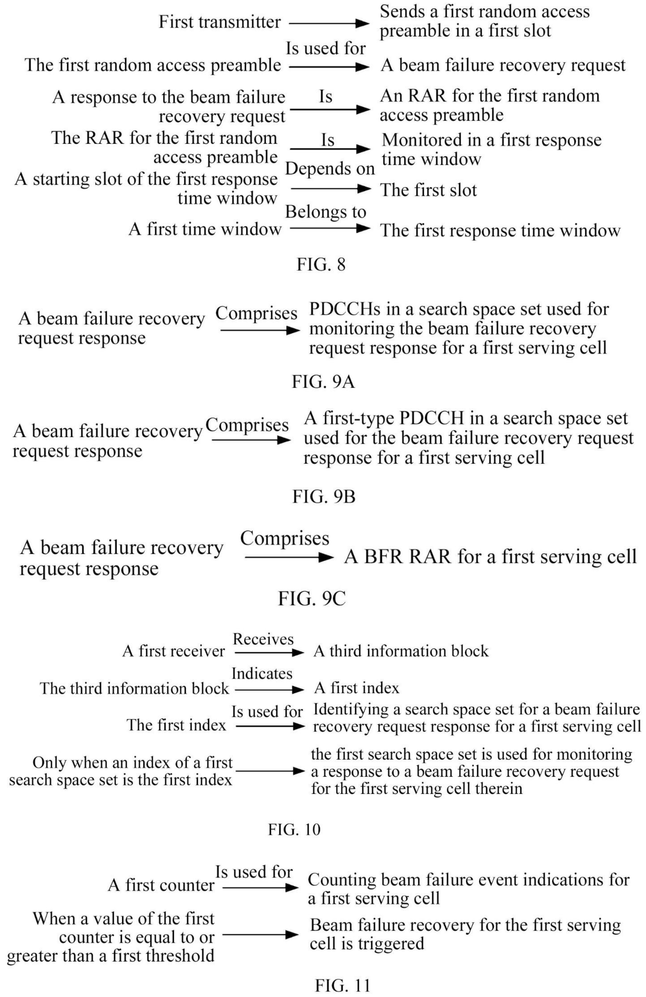

Embodiment 8 illustrates a schematic diagram of a first random access preamble according to one embodiment of the present application, as shown in FIG. 8.

In Embodiment 8, a first node sends the first random access preamble in a first slot, wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and a first time window belongs to the first response time window.

As one embodiment, the first random access preamble is on a first serving cell.

As one embodiment, the first random access preamble is on an SpCell.

As one embodiment, the first random access preamble is on a PSCell.

As one embodiment, the first random access preamble is on a PCell.

As one embodiment, the first random access preamble occupies a CFRA (Contention-Free Random Access) resource.

As one embodiment, the first random access preamble is a CFRA resource.

As one embodiment, the first random access preamble is a contention-free random access preamble.

As one embodiment, the contention-free random access preamble for the beam failure recovery request is indicated by a higher layer parameter PRACH-ResourceDedicatedBFR.

As one embodiment, a specific definition of the PRACH-ResourceDedicatedBFR refers to Chapter 6.3.2 of 3GPP TS38.331.

As one embodiment, a specific definition of a random access preamble refers to Chapter 8.1 of 3GPP TS38.213.

As one embodiment, the specific definition of a random access preamble refers to Chapter 6.3.3 of 3GPP TS38.211.

As one embodiment, "the first random access preamble is used for a beam failure recovery request" refers to: sending of the first random access preamble is used for requesting beam failure recovery.

As one embodiment, "the first random access preamble is used for a beam failure recovery request" refers to: sending of the first random access preamble is used for requesting beam failure recovery by the first node.

As one embodiment, "the first random access preamble is used for a beam failure recovery request" refers to: the beam failure recovery request comprises sending of the first random access preamble.

As one embodiment, "the first random access preamble is used for a beam failure recovery request" refers to: sending of the first random access preamble is used for triggering the response to the beam failure recovery request.

As one embodiment, "the first random access preamble is used for a beam failure recovery request" refers to: sending of the first random access preamble is used for triggering the response to the beam failure recovery request by the first node.

As one embodiment, "the first random access preamble is used for a beam failure recovery request" refers to: after sending the first random access preamble, the first node monitors the response to the beam failure recovery request.

As one embodiment, "the first random access preamble is used for a beam failure recovery request" refers to: after sending the first random access preamble, the first node monitors in the first response time window the response to the beam failure recovery request.

As one embodiment, the beam failure recovery request refers to: the beam failure recovery request for the first serving cell.

As one embodiment, the RAR of the first random access preamble is transmitted on a PDCCH in a search space set used for a beam failure recovery request response for the first serving cell.

As one embodiment, the RAR of the first random access preamble is a PDCCH in a search space set used for the beam failure recovery request response for the first serving cell.

As one embodiment, the RAR of the first random access preamble is transmitted on a first-type PDCCH in a search space set used for the beam failure recovery request response for the first serving cell, and the first-type PDCCH satisfies: a CRC in a DCI format is scrambled by an RNTI in a first RNTI set.

As one embodiment, the RAR of the first random access preamble is the first-type PDCCH in a search space set used for the beam failure recovery request response for the first serving cell, and the first-type PDCCH satisfies: a CRC in a DCI format is scrambled by an RNTI in the first RNTI set.

As one embodiment, the first response time window comprises one or more slots.

As one embodiment, the first response time window comprises a plurality of slots.

As one embodiment, the first response time window comprises a plurality of continuous slots.

As one embodiment, the first response time window is configured by higher layer signaling.

As one embodiment, the first response time window is configured by RRC signaling.

As one embodiment, the first response time window is configured by one or more RRC IEs.

As one embodiment, the first response time window is configured by one RRC IE.

As one embodiment, the first response time window is configured by part of or all fields in one RRC IE.

As one embodiment, the first response time window is configured by an IE BeamFailureRecoveryConfig.

As one embodiment, the first response time window is configured by an ra-Response Window.

As one embodiment, the first response time window is the ra-ResponseWindow.

As one embodiment, a duration of the first response time window is configured by the IE BeamFailureRecoveryConfig.

As one embodiment, the duration of the first response time window is configured by a parameter, a name of which comprises the ra-ResponseWindow in an IE RACH-ConfigGeneric indicated by a rach-ConfigBFR field in the IE BeamFailureRecoveryConfig.

As one embodiment, the duration of the first response time window is configured by a higher layer parameter, a name of which comprises the ra-ResponseWindow.

As one embodiment, a specific definition of the ra-ResponseWindow refers to Chapter 5.1.4 of 3GPP TS38.321.

As one embodiment, a specific definition of the IE BeamFailureRecoveryConfig refers to Chapter 6.3.2 of 3GPP TS38.331.

As one embodiment, the first response time window starts at the first PDCCH occasion from a sending end moment of the first random access preamble.

Typically, "first" means: earliest.

As one embodiment, "a starting slot of the first response time window depends on the first slot" comprises: the starting slot of the first response time window is one slot later than the first slot.

As one embodiment, "a starting slot of the first response time window depends on the first slot" comprises: the first slot is *n,* the starting slot of the first response time window is *n* + *P,* and P is a positive integer greater than 1.

As one embodiment, *n* is a serial number of the first slot, and *n* is a non-negative integer.

As one embodiment, "a starting slot of the first response time window depends on the first slot" comprises: the first slot is *n*, the starting slot of the first response time window is *n* + 4 + 2*^{µ}* · *k_{mac}, µ* is a subcarrier spacing configuration of the first random access preamble, and *k_{mac}* is configured by a higher layer parameter K-Mac.

As one embodiment, "a starting slot of the first response time window depends on the first slot" comprises: the first slot is *n,* the starting slot of the first response time window is *n +* 4 + *2^{µ}* · *k_{mac}, µ* is the subcarrier spacing configuration of the first random access preamble, and *k_{mac}* is equal to 0.

As one embodiment, P is equal to 4 + 2*^{µ}* · *k_{mac}.*

### Embodiments 9A-9C

Embodiments 9A-9C illustrate schematic diagrams of a beam failure recovery request response respectively according to one embodiment of the present application, as shown in FIGs. 9A-9C.

In Embodiment 9A, the beam failure recovery request response comprises PDCCHs in a search space set used for monitoring the beam failure recovery request response for a first serving cell.

In Embodiment 9B, the beam failure recovery request response comprises a first-type PDCCH in a search space set used for the beam failure recovery request response for the first serving cell, and the first-type PDCCH satisfies that a CRC in a DCI format is scrambled by an RNTI in a first RNTI set.

In Embodiment 9C, the beam failure recovery request response comprises a BFR RAR for the first serving cell.

As one embodiment, the beam failure recovery request response is a PDCCH in a search space set used for monitoring the beam failure recovery request response for the first serving cell.

As one embodiment, the beam failure recovery request response is the first-type PDCCH in a search space set used for the beam failure recovery request response for the first serving cell, and the first-type PDCCH satisfies that a CRC in a DCI format is scrambled by an RNTI in the first RNTI set.

As one embodiment, the first RNTI set comprises at least one of a C-RNTI and an MCS-C-RNTI.

As one embodiment, the first RNTI set comprises a C-RNTI and an MCS-C-RNTI.

As one embodiment, the first RNTI set comprises at least a C-RNTI and an MCS-C-RNTI.

As one embodiment, the beam failure recovery request response is the BFR RAR.

As one embodiment, the beam failure recovery request response is the BFR RAR for the first serving cell.

As one embodiment, the beam failure recovery request response is the BFR RAR only for the first serving cell.

### Embodiment 10

Embodiment 10 illustrates a schematic diagram of a third information block according to one embodiment of the present application, as shown in FIG. 10.

In Embodiment 10, a first node receives the third information block, wherein the third information block indicates a first index, and the first index is used for identifying a search space set for a beam failure recovery request response for a first serving cell; and only when an index of a first search space set is the first index, the first search space set is used for monitoring a response to a beam failure recovery request for the first serving cell therein.

As one embodiment, the third information block is borne by higher layer signaling.

As one embodiment, the third information block is borne by RRC signaling.

As one embodiment, the third information block comprises one or more RRC IEs.

As one embodiment, the third information block comprises one RRC IE.

As one embodiment, the third information block comprises part of or all fields in one RRC IE.

As one embodiment, the third information block comprises part of fields in one RRC IE.

As one embodiment, the third information block comprises part of fields in an IE BeamFailureRecoveryConfig.

As one embodiment, the third information block comprises a recoverySearchSpaceId field in the IE BeamFailureRecoveryConfig.

As one embodiment, the third information block is the recoverySearchSpaceId field.

As one embodiment, the first index is a recoverySearchSpaceId.

As one embodiment, the first index is one SearchSpaceId.

As one embodiment, an index of the first search space set is one SearchSpaceId.

As one embodiment, an index of the first search space set is used for identifying the first search space set.

As one embodiment, when an index of the first search space set is different from the first index, the first search space set is one search space set other than a search space set used for the beam failure recovery request response.

As one embodiment, when an index of the first search space set is different from the first index, the first search space set is not used for the beam failure recovery request response.

As one embodiment, when an index of the first search space set is the first index, the first search space set is a search space set used for the beam failure recovery request response.

As one embodiment, when an index of the first search space set is the first index, the first search space set is used for the beam failure recovery request response.

As one embodiment, when an index of the first search space set is the first index, the first search space set is used for the beam failure recovery request response by the first node.

As one embodiment, when an index of the first search space set is the first index, the first search space set is used for monitoring the response to the beam failure recovery request for the first serving cell by the first node.

As one embodiment, specific definitions of the IE BeamFailureRecoveryConfig, the recoverySearchSpaceld, and the SearchSpaceld refer to Chapter 6.3.2 of 3GPP TS38.321.

### Embodiment 11

Embodiment 11 illustrates a schematic diagram of beam failure recovery for a first serving cell according to one embodiment of the present application, as shown in FIG. 11.

In Embodiment 11, a first counter is used for counting beam failure event indications for the first serving cell; and when a value of the first counter is equal to or greater than a first threshold, beam failure recovery for the first serving cell is triggered.

Typically, a sentence of "when a value of the first counter is equal to or greater than a first threshold" refers to: when and only when a value of the first counter is equal to or greater than the first threshold.

Typically, the sentence of "when a value of the first counter is equal to or greater than a first threshold" refers to: in response to a value of the first counter being equal to or greater than the first threshold.

Typically, a first node maintains the first counter at a MAC layer.

Typically, a MAC entity of the first node maintains the first counter.

Typically, whenever the MAC entity of the first node receives a beam failure event indication for the first serving cell from a physical layer, a target timer is started or restarted, and a value of the first counter is increased by 1.

Typically, the target timer is beamFailureDetectionTimer.

Typically, when the target timer expires, a value of the first counter is set to 0.

Typically, the first counter is BFI_COUNTER.

Typically, an initial value of the first counter is 0.

Typically, the first threshold is beamFailureInstanceMaxCount.

As one embodiment, the first threshold is a positive integer.

As one embodiment, the first threshold is configured by an RRC parameter.

As one embodiment, the first threshold is configured by an RRC parameter, a name of which comprises beamFailureInstanceMaxCount.

As one embodiment, an RRC parameter configuring the first threshold comprises all or part of information in a beamFailureInstanceMaxCount field of a RadioLinkMonitoringConfig IE.

As one embodiment, the first threshold is configured by an RRC parameter beamFailureInstanceMaxCount.

As one embodiment, the target timer is beamFailureDetectionTimer.

As one embodiment, the initial value of the target timer is a positive integer.

As one embodiment, the initial value of the target timer is a positive real number.

As one embodiment, the initial value of the target timer is configured by a higher layer parameter beamFailureDetectionTimer.

As one embodiment, the initial value of the target timer is configured by one IE.

As one embodiment, a name of the IE configuring the initial value of the target timer comprises RadioLinkMonitoring.

As one embodiment, specific definitions of the beamFailureInstanceMaxCount and the beamFailureDetectionTimer refer to Chapter 6.3.2 of 3GPP TS38.331.

As one embodiment, specific definitions of the BFI_COUNTER, the beamFailureInstanceMaxCount, and the beamFailureDetectionTimer refer to Chapter 5.17 of 3GPP TS38.321.

As one embodiment, it comprises:
a first receiver receiving a first higher layer message set, the first higher layer message set being used for configuring a first RS resource pool for a first BWP, and the first BWP being one BWP in the first serving cell, wherein the radio link quality of the first BWP is assessed according to the first RS resource pool; and whenever the radio link quality assessed according to the first RS resource pool is inferior to a reference threshold, a physical layer of the first node sends the beam failure event indication for the first serving cell to a higher layer thereof.

Typically, the first higher layer message set comprises at least one higher layer message.

Typically, the first higher layer message set comprises an RRC message.

Typically, the first higher layer message set comprises at least an RRC message of an RRC message or a MAC CE message.

As one embodiment, the first higher layer message set comprises an RRC message and a MAC CE message.

As one embodiment, the first higher layer message set comprises part of or all fields in one or more RRC IEs.

As one embodiment, the first higher layer message set comprises part of or all fields in one RRC IE.

As one embodiment, the first higher layer message set comprises part of fields in an RRC IE RadioLinkMonitoringConfig.

As one embodiment, the first higher layer message set comprises a field, a name of which comprises failureDetectionResourcesToAddModList in an RRC IE.

As one embodiment, the first higher layer message set comprises a failureDetectionResourcesToAddModList field in the RRC IE RadioLinkMonitoringConfig.

As one embodiment, the first higher layer message set comprises a failureDetectionSet1 field and a failureDetectionSet2 field in the RRC IE RadioLinkMonitoringConfig.

As one embodiment, the first higher layer message set comprises a field, a name of which comprises the failureDetectionSet1 and a field, a name of which comprises the failureDetectionSet2 in an RRC IE.

As one embodiment, the first higher layer message set comprises at least one field, a name of which comprises failureDetectionSet in an RRC IE.

As one embodiment, a name of the RRC message in the first higher layer message set comprises failureDetectionResources.

As one embodiment, the name of the RRC message in the first higher layer message set comprises failureDetectionSet.

As one embodiment, the RRC message in the first higher layer message set comprises the failureDetectionSet1 field and the failureDetectionSet2 field in the RRC IE RadioLinkMonitoringConfig, and the MAC CE message in the first higher layer message set comprises a BFD-RS Indication MAC CE.

As one embodiment, the MAC CE message in the first higher layer message set is the BFD-RS Indication MAC CE.

As one embodiment, a name of the MAC CE message in the first higher layer message set comprises BFD-RS Indication MAC CE.

As one embodiment, the name of the MAC CE message in the first higher layer message set comprises BFD.

As one embodiment, the first higher layer message set comprises the failureDetectionSet1 field and the failureDetectionSet2 field in the RRC IE RadioLinkMonitoringConfig, and the BFD-RS Indication MAC CE.

Typically, when the number of RS resources indicated by the failureDetectionSet1 field or the failureDetectionSet2 field in the RRC IE RadioLinkMonitoringConfig is greater than 2, the BFD-RS Indication MAC CE activates one or two RS resources from the failureDetectionSet1 or the failureDetectionSet2.

As one embodiment, specific definitions of the IE RadioLinkMonitoringConfig, the failureDetectionResourcesToAddModList field, the failureDetectionSet1 field and the failureDetectionSet2 field refer to Chapter 6.3.2 of 3GPP TS38.331.

As one embodiment, a specific definition of the BFD-RS Indication MAC CE refers to Chapter 5.18.25 of 3GPP TS38.321.

As one embodiment, each RS resource in the first RS resource pool is configured by the first higher layer message set.

As one embodiment, the first higher layer message set comprises an index of each RS resource comprised in the first RS resource pool.

As one embodiment, the first higher layer message set comprises an RRC message and a MAC CE message; and the RRC message in the first higher layer message set is used for configuring a target RS resource pool for the first BWP, and the MAC CE message in the first higher layer message set is used for activating the first RS resource pool from the target RS resource pool.

As one embodiment, the first higher layer message set comprises an RRC message and a MAC CE message; and the first RS resource pool belongs to the target RS resource pool, the RRC message in the first higher layer message set comprises an index of each RS resource comprised in the target RS resource pool, and the MAC CE message in the first higher layer message set activates the first RS resource pool from the target RS resource pool.

As one embodiment, the first RS resource pool comprises at least one RS resource, and the at least one RS resource in the first RS resource pool comprises at least one of a CSI-RS resource or an SS/PBCH block resource.

As one embodiment, the first RS resource pool comprises at least one RS resource, and any RS resource in the first RS resource pool is a CSI-RS resource.

As one embodiment, the first RS resource pool comprises at least one RS resource, and any one RS resource in the first RS resource pool is a periodic CSI-RS resource.

As one embodiment, the maximum number of RS resources comprised in the first RS resource pool is 2.

As one embodiment, an index of one RS resource is used for identifying the one RS resource.

As one embodiment, an index of one RS resource is a configuration index of the one RS resource.

As one embodiment, an index of one RS resource comprises a configuration index of the one RS resource.

As one embodiment, an index of one periodic CSI-RS resource is a configuration index of the one periodic CSI-RS resource.

As one embodiment, an index of one periodic CSI-RS resource comprises a configuration index of the one periodic CSI-RS resource.

As one embodiment, an index of one CSI-RS resource is an NZP-CSI-RS-ResourceId.

As one embodiment, an index of one CSI-RS resource is an NZP-CSI-RS-ResourceId.

As one embodiment, an index of one CSI-RS resource is a csi-RS-Index.

As one embodiment, an index of one SS/PBCH block resource is an SSB-Index.

As one embodiment, an index of one SS/PBCH block resource is an ssb-Index.

As one embodiment, the first RS resource pool is configured for radio link quality assessment by the first higher layer message set.

As one embodiment, the radio link quality assessment is used for beam failure monitoring.

As one embodiment, the radio link quality assessment comprises judging whether the radio link quality is inferior to the reference threshold.

As one embodiment, the radio link quality is RSRP (Reference Signal Received Power).

As one embodiment, the radio link quality is L1-RSRP (Layer 1-Reference Signal Received Power).

As one embodiment, the radio link quality is an SINR (signal-to-noise and interference ratio).

As one embodiment, the radio link quality is an L1-SINR (Layer 1-signal-to-noise and interference ratio).

As one embodiment, the radio link quality is a BLER (Block Error Ratio).

As one embodiment, the radio link quality is a hypothetical BLER.

As one embodiment, the radio link quality is one of an RSRP, an L1-RSRP, an SINR, or an L1-SINR, and the meaning of "the radio link quality is assessed according to the first RS resource pool" comprises: the radio link quality is a maximum value of an RSRP, an L1-RSRP, an SINR, or an L1-SINR measured based on all RS resources in the first RS resource pool.

As one embodiment, the radio link quality is one of an RSRP, an L1-RSRP, an SINR, or an L1-SINR, and the meaning of "the radio link quality is assessed according to the first RS resource pool" comprises: the radio link quality is an average value of an RSRP, an L1-RSRP, an SINR, or an L1-SINR measured based on all RS resources in the first RS resource pool.

As one embodiment, the radio link quality is a BLER, and the meaning of "the radio link quality is assessed according to the first RS resource pool" comprises: the radio link quality is a minimum value of a BLER measured based on all RS resources in the first RS resource pool.

As one embodiment, the radio link quality is a BLER, and the meaning of "the radio link quality is assessed according to the first RS resource pool" comprises: the radio link quality is an average value of a BLER measured based on all RS resources in the first RS resource pool.

As one embodiment, the radio link quality is a hypothetical BLER, and the meaning of "the radio link quality is assessed according to the first RS resource pool" comprises: the radio link quality is a minimum value of a hypothetical BLER measured based on all RS resources in the first RS resource pool.

As one embodiment, the radio link quality is a hypothetical BLER, and the meaning of "the radio link quality is assessed according to the first RS resource pool" comprises: the radio link quality is an average value of a hypothetical BLER measured based on all RS resources in the first RS resource pool.

As one embodiment, the radio link quality is one of an RSRP, an L1-RSRP, an SINR or an L1-SINR; and the meaning of a phrase of "the radio link quality assessed according to the first RS resource pool is inferior to a reference threshold" comprises: the radio link quality assessed according to the first RS resource pool is less than the reference threshold.

As one sub-embodiment of the above embodiment, a unit of the reference threshold is dBm or dB.

As one sub-embodiment of the above embodiment, the reference threshold is an RSRP threshold.

As one sub-embodiment of the above embodiment, the reference threshold is an L1-RSRP threshold.

As one sub-embodiment of the above embodiment, the reference threshold is an SINR threshold.

As one sub-embodiment of the above embodiment, the reference threshold is an L1-SINR threshold.

As one embodiment, the radio link quality is a BLER; and the meaning of the phrase of "the radio link quality assessed according to the first RS resource pool is inferior to a reference threshold" comprises: the radio link quality assessed according to the first RS resource pool is greater than the reference threshold.

As one sub-embodiment of the above embodiment, the reference threshold is a BLER threshold.

As one embodiment, the radio link quality is a hypothetical BLER; and the meaning of a phrase of "the radio link quality assessed according to the first RS resource pool is inferior to a reference threshold" comprises: the radio link quality assessed according to the first RS resource pool is greater than the reference threshold.

As one sub-embodiment of the above embodiment, the reference threshold is a hypothetical BLER threshold.

As one embodiment, the reference threshold is a real number.

As one embodiment, the reference threshold is a non-negative real number.

As one embodiment, the reference threshold is a non-negative real number not greater than 1.

As one embodiment, the reference threshold is Qout_LR.

As one embodiment, the reference threshold is one of Qout_LR, Qout_LR_SSB, or Qout_LR_CSI-RS.

As one embodiment, definitions of Qout_LR, Qout_LR_SSB, and Qout_LR_CSI-RS refer to 3GPP TS38.133.

As one embodiment, the reference threshold is configured by an RRC parameter rlmInSyncOutOfSyncThreshold.

As one embodiment, the reference threshold is a default value of rlmInSyncOutOfSyncThreshold.

As one embodiment, a specific definition of rlmInSyncOutOfSyncThreshold refers to Chapter 6 of 3GPP TS38.213.

As one embodiment, a definition of rlmInSyncOutOfSyncThreshold refers to 3GPP TS38.133.

As one embodiment, a beam failure recovery process for the first serving cell comprises sending a beam failure recovery request and monitoring a response to the beam failure recovery request.

As one sub-embodiment of the above embodiment, when the response to the beam failure recovery request is received, the beam failure recovery process for the first serving cell is considered to be successfully completed.

As one embodiment, the beam failure recovery process for the first serving cell comprises sending a first random access preamble in a first slot and monitoring in a first response time window an RAR for the first random access preamble.

As one sub-embodiment of the above embodiment, when the RAR for the first random access preamble is monitored in the first response time window, the beam failure recovery process for the first serving cell is considered to be successfully completed.

As one embodiment, when beam failure recovery for the first serving cell is triggered, the beam failure recovery process for the first serving cell comprises sending at least one of a random access preamble, a BFR MAC CE, a Truncated BFR MAC CE, an Enhanced BFR MAC CE, or a Truncated Enhanced BFR MAC CE.

As one embodiment, the beam failure recovery for the first serving cell comprises a random access process.

As one embodiment, the beam failure recovery for the first serving cell comprises at least one of sending the random access preamble, sending the BFR MAC CE, sending the Truncated BFR MAC CE, sending the Enhanced BFR MAC CE, or sending the Truncated Enhanced BFR MAC CE.

As one embodiment, the random access preamble is a contention-based random access preamble.

As one embodiment, the random access preamble is a contention-free random access preamble.

As one embodiment, the random access preamble comprises the first random access preamble.

As one embodiment, the random access preamble is the first random access preamble.

As one embodiment, the beam failure recovery for the first serving cell comprises sending one of the BFR MAC CE, the Truncated BFR MAC CE, the Enhanced BFR MAC CE, or the Truncated Enhanced BFR MAC CE.

As one embodiment, the beam failure recovery for the first serving cell comprises sending a MAC CE, a name of which comprises "BFR".

As one embodiment, the beam failure recovery process specifically refers to Chapter 5.17 of 3GPP TS38.321.

As one embodiment, the beam failure recovery process specifically refers to Chapter 6 of 3GPP TS38.213.

As one embodiment, it comprises:
the first receiver receiving a second higher layer message set, the second higher layer message set being used for configuring a second RS resource pool for the first BWP.

As one embodiment, the second higher layer message set comprises part of or all fields in one or more RRC IEs.

As one embodiment, the second higher layer message set comprises part of or all fields in each RRC IE among a plurality of RRC IEs.

As one embodiment, the second higher layer message set comprises part of or all fields in one RRC IE.

As one embodiment, the second higher layer message set comprises part of fields in one RRC IE.

As one embodiment, the second higher layer message set comprises part of or all fields in an IE, a name of which comprises "BeamFailureRecovery".

As one embodiment, the second higher layer message set comprises part of or all fields in a BeamFailureRecoveryConfig IE.

As one embodiment, the second higher layer message set comprises part of fields in the BeamFailureRecoveryConfig IE.

As one embodiment, the second higher layer message set comprises a field, a name of which comprises "candidateBeamRS".

As one embodiment, the second higher layer message set comprises a field, a name of which comprises "candidateBeamRSList".

As one embodiment, the second higher layer message set comprises a field, a name of which comprises "candidateBeamRSListExt".

As one embodiment, the second higher layer message set comprises a candidateBeamRSList field in the BeamFailureRecoveryConfig IE.

As one embodiment, the second higher layer message set comprises a candidateBeamRSListExt field in the BeamFailureRecoveryConfig IE.

As one embodiment, the second higher layer message set comprises a candidateBeamRS SCellList field.

As one embodiment, the second higher layer message set comprises part of or all fields in a BeamFailureRecoveryRSConfig IE.

As one embodiment, the second higher layer message set comprises part of fields in the BeamFailureRecoveryRSConfig IE.

As one embodiment, the second higher layer message set comprises a field, a name of which comprises "candidateBeamRS-List" in the BeamFailureRecoveryRSConfig IE.

As one embodiment, the second higher layer message set comprises a candidateBeamRS-List field in the BeamFailureRecoveryRSConfig IE.

As one embodiment, the second higher layer message set comprises a candidateBeamRS-List2 field in the BeamFailureRecoveryRSConfig IE.

As one embodiment, the second higher layer message set comprises part of or all fields in a CandidateBeamRS IE.

As one embodiment, the second higher layer message set comprises part of fields in the CandidateBeamRS IE.

As one embodiment, the candidateBeamRSList, the candidateBeamRSListExt, a candidateBeamRSSCellList, the BeamFailureRecoveryConfig IE, the candidateBeamRS-List, a candidateBeamRS-List2, the BeamFailureRecoveryRSConfig IE, and the CandidateBeamRS IE specifically refer to 3GPP TS 38.331.

As one embodiment, each RS resource in the second RS resource pool is configured by the second higher layer message set.

As one embodiment, the second higher layer message set comprises an index of each RS resource comprised in the second RS resource pool.

As one embodiment, the second higher layer message set indicates an index of each RS resource comprised in the second RS resource pool.

As one embodiment, the second RS resource pool comprises at least one RS resource, and the at least one RS resource in the second RS resource pool comprises at least one of a CSI-RS resource or an SS/PBCH block resource.

As one embodiment, the second RS resource pool comprises at least one RS resource, and any one RS resource in the second RS resource pool is a CSI-RS resource.

As one embodiment, the second RS resource pool comprises at least one RS resource, and any one RS resource in the second RS resource pool is a periodic CSI-RS resource.

As one embodiment, the second RS resource pool comprises at least one RS resource, and any one RS resource in the second RS resource pool is an SS/PBCH block resource.

As one embodiment, the first BWP is one BWP in the first serving cell.

As one embodiment, the first BWP is one DL BWP in the first serving cell.

As one embodiment, the first random access preamble is associated with a target RS resource, and the target RS resource is one RS resource in the second RS resource pool.

As one embodiment, "the first random access preamble is associated with a target RS resource" comprises: the first random access preamble implicitly indicates the target RS resource.

As one embodiment, "the first random access preamble is associated with a target RS resource" comprises: the first random access preamble indirectly indicates the target RS resource.

As one embodiment, "the first random access preamble is associated with a target RS resource" comprises: the first random access preamble corresponds to the target RS resource.

As one embodiment, an RSRP value measured for the target RS resource is greater than a target RSRP threshold, and the first random access preamble is a random access preamble associated with the target RS resource.

As one embodiment, the target RSRP threshold is one RSRP threshold.

As one embodiment, the target RSRP threshold is configured by a higher layer parameter.

As one embodiment, the target RSRP threshold is configured by a higher layer parameter, a name of which comprises "rsrp-Threshold".

As one embodiment, the target RSRP threshold is configured by a higher layer parameter rsrp-ThresholdSSB.

As one embodiment, the target RSRP threshold is configured by an rsrp-ThresholdSSB field in the BeamFailureRecoveryConfig IE.

As one embodiment, the target RSRP threshold is configured by a higher layer parameter rsrp-ThresholdBFR.

As one embodiment, the target RSRP threshold is configured by an rsrp-ThresholdBFR field in the BeamFailureRecoveryRSConfig IE.

As one embodiment, the target RSRP threshold is configured by a higher layer parameter rsrp-ThresholdCSI-RS.

As one embodiment, the target RSRP threshold is configured by an rsrp-ThresholdCSI-RS field in a RACH-ConfigDedicated IE.

As one embodiment, the target RS resource is a CSI-RS resource, and the target RSRP threshold is the rsrp-ThresholdCSI-RS.

As one embodiment, the target RS resource is an SS/PBCH block resource, and the target RSRP threshold is the rsrp-ThresholdSSB.

As one embodiment, an SS/PBCH block resource is an SSB resource.

As one embodiment, specific definitions of the rsrp-ThresholdSSB, the rsrp-ThresholdBFR, the rsrp-ThresholdCSI-RS, and the RACH-ConfigDedicated IE refer to Chapter 6.3.2 of 3GPP TS 38.331.

As one embodiment, when the RAR for the first random access preamble is received in the first response time window, the beam failure recovery process for the first serving cell is considered to be successfully completed.

As one embodiment, when a first-type PDCCH is received in a search space set used for a beam failure recovery request response for the first serving cell in the first response time window, the beam failure recovery process for the first serving cell is considered to be successfully completed; and the first-type PDCCH satisfies: a CRC in a DCI format is scrambled by an RNTI in a first RNTI set.

As one embodiment, when the first-type PDCCH is received in a search space set used for the beam failure recovery request response for the first serving cell in the first response time window, the beam failure recovery process for the first serving cell is considered to be successfully completed; and the first-type PDCCH satisfies: a CRC in a DCI format is scrambled by a C-RNTI.

### Embodiment 12

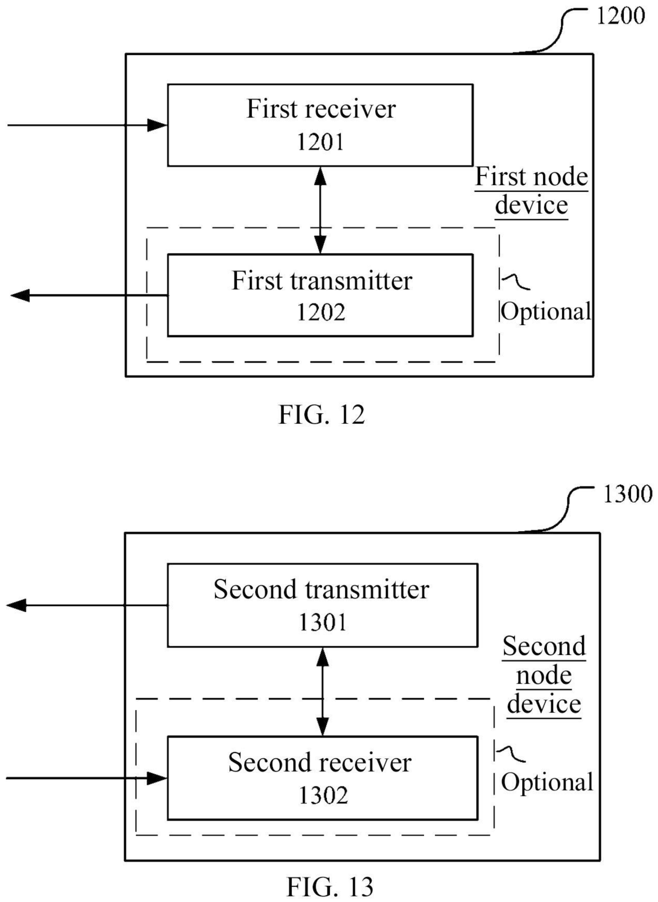

Embodiment 12 illustrates a structural block diagram of a processing apparatus used in a first node device according to one embodiment of the present application, as shown in FIG. 12. In FIG. 12, a processing apparatus 1200 in the first node device comprises at least a first receiver 1201 in the first receiver 1201 or a first transmitter 1202, and the first transmitter 1202 is optional.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {the antenna 452, a transmitting device 454, a transmitting processor 468, a multi-antenna transmitting processor 457, the controller/processor 459, the memory 460, and the data source 467} in Embodiment 4.

The first receiver 1201 receives a first information block, the first information block being used for configuring a first search space set on a first serving cell; and receives a second information block, the second information block being used for determining a first time domain resource set.

In Embodiment 12, a first node monitors in a first time window PDCCHs in the first search space set, or, in a first time window, abandons monitoring of PDCCHs in the first search space set; the monitoring is a detection for a DCI format in which a CRC is scrambled by an RNTI in a first RNTI set; the first RNTI set consists of one or more RNTIs; and the first time window belongs to the first time domain resource set, and the first time window comprises at least one PDCCH candidate in the first search space set, wherein whether a behavior of monitoring in the first time window the PDCCHs in the first search space set is executed depends on whether a first condition is satisfied; and the first condition comprises the first search space set being used for a beam failure recovery request response, or, the first condition comprises the first node monitoring in the first time window a beam failure recovery request response.

As one embodiment, the first condition comprises the first search space set being used for the beam failure recovery request response; and when the first search space set is used for the beam failure recovery request response, the behavior of monitoring in the first time window the PDCCHs in the first search space set is executed.

As one embodiment, the first condition comprises the first node monitoring in the first time window the beam failure recovery request response; and when the first node monitors in the first time window the beam failure recovery request response, the behavior of monitoring in the first time window the PDCCHs in the first search space set is executed.

As one embodiment, it comprises:
the first transmitter 1202 sending a first random access preamble in a first slot;
wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

As one embodiment, the beam failure recovery request response comprises the PDCCHs in a search space set used for monitoring the beam failure recovery request response for the first serving cell.

As one embodiment, the beam failure recovery request response comprises a first-type PDCCH in a search space set used for the beam failure recovery request response for the first serving cell, and the first-type PDCCH satisfies that a CRC in a DCI format is scrambled by an RNTI in the first RNTI set.

As one embodiment, the beam failure recovery request response comprises a BFR RAR for the first serving cell.

As one embodiment, it comprises:
the first receiver 1201 receiving a third information block;
wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

As one embodiment, a first counter is used for counting beam failure event indications for the first serving cell; and when a value of the first counter is equal to or greater than a first threshold, beam failure recovery for the first serving cell is triggered.

### Embodiment 13

Embodiment 13 illustrates a structural block diagram of a processing apparatus used in a second node device according to one embodiment of the present application, as shown in FIG. 13. In FIG. 13, a processing apparatus 1300 in the second node device comprises at least a second transmitter 1301 in the second transmitter 1301 or a second receiver 1302, and the second receiver 1302 is optional.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {the antenna 420, a receiving device 418, a receiving processor 470, a multi-antenna receiving processor 472, the controller/processor 475, and the memory 476} in Embodiment 4.

The second transmitter 1301 sends a first information block, the first information block being used for configuring a first search space set on a first serving cell; and sends a second information block, the second information block being used for determining a first time domain resource set.

In Embodiment 13, a recipient of the first information block monitors in a first time window PDCCHs in the first search space set, or, a recipient of the first information block abandons monitoring in a first time window PDCCHs in the first search space set; the monitoring is a detection for a DCI format in which a CRC is scrambled by an RNTI in a first RNTI set; the first RNTI set consists of one or more RNTIs; and the first time window belongs to the first time domain resource set, and the first time window comprises at least one PDCCH candidate in the first search space set, wherein whether a behavior of monitoring in the first time window the PDCCHs in the first search space set is executed depends on whether a first condition is satisfied; and the first condition comprises the first search space set being used for a beam failure recovery request response, or, the first condition comprises a first node monitoring in the first time window a beam failure recovery request response.

As one embodiment, the first condition comprises the first search space set being used for the beam failure recovery request response; and when the first search space set is used for the beam failure recovery request response, the behavior of monitoring in the first time window the PDCCHs in the first search space set is executed.

As one embodiment, the first condition comprises the first node monitoring in the first time window the beam failure recovery request response; and when the first node monitors in the first time window the beam failure recovery request response, the behavior of monitoring in the first time window the PDCCHs in the first search space set is executed.

As one embodiment, it comprises:
the second receiver 1302 receiving in a first slot a first random access preamble;
wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

As one embodiment, the beam failure recovery request response comprises the PDCCHs in a search space set used for monitoring the beam failure recovery request response for the first serving cell.

As one embodiment, the beam failure recovery request response comprises a first-type PDCCH in a search space set used for the beam failure recovery request response for the first serving cell, and the first-type PDCCH satisfies that a CRC in a DCI format is scrambled by an RNTI in the first RNTI set.

As one embodiment, the beam failure recovery request response comprises a BFR RAR for the first serving cell.

As one embodiment, it comprises:
the second transmitter 1301 sending a third information block;
wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

As one embodiment, a first counter is used for counting beam failure event indications for the first serving cell; and when a value of the first counter is equal to or greater than a first threshold, beam failure recovery for the first serving cell is triggered.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The user equipment, terminals and UE in the present application include but are not limited to drones, communication modules on the drones, remote-controlled airplanes, aircrafts, small airplanes, mobile phones, tablet computers, notebook computers, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base stations or system devices in the present application include, but are not limited to, macrocellular base stations, microcellular base stations, Femtocells, relay base stations, gNBs (NR nodes B), TRPs (Transmitter Receiver Points), GNSS, relay satellites, satellite base stations, aerial base stations, RSUs (Road Side Units), drones, test devices (such as transceiving apparatuses or signaling testers that simulate some functions of base stations), and other wireless communication devices.

The above are only preferred embodiments of the present application and are not intended to limit the scope of protection of the present application. Any change and modification made based on the embodiments described in the specification, if similar partial or complete technical effects can be obtained, should be deemed obvious and belong to the scope of protection of the present invention.

## Claims

1. A first node device for wireless communication, comprising:
a first receiver receiving a first information block, the first information block being used for configuring a first search space set on a first serving cell;
receiving a second information block, the second information block being used for determining a first time domain resource set; and
monitoring in a first time window PDCCHs in the first search space set, or, in a first time window, abandoning monitoring of PDCCHs in the first search space set, the monitoring being a detection for a DCI format in which a CRC is scrambled by an RNTI in a first RNTI set, the first RNTI set consisting of one or more RNTIs, the first time window belonging to the first time domain resource set, and the first time window comprising at least one PDCCH candidate in the first search space set;
wherein whether a behavior of monitoring in the first time window the PDCCHs in the first search space set is executed depends on whether a first condition is satisfied, and the first condition comprises the first search space set being used for a beam failure recovery request response, or, the first condition comprises a first node monitoring in the first time window a beam failure recovery request response.

2. The first node device according to claim 1, wherein the first condition comprises the first search space set being used for the beam failure recovery request response; and when the first search space set is used for the beam failure recovery request response, the behavior of monitoring in the first time window the PDCCHs in the first search space set is executed.

3. The first node device according to claim 1, wherein the first condition comprises the first node monitoring in the first time window the beam failure recovery request response; and when the first node monitors in the first time window the beam failure recovery request response, the behavior of monitoring in the first time window the PDCCHs in the first search space set is executed.

4. The first node device according to any one of claims 1 to 3, comprising:
a first transmitter sending in a first slot a first random access preamble;
wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

5. The first node device according to any one of claims 1 to 4, wherein the beam failure recovery request response comprises PDCCHs in a search space set used for monitoring the beam failure recovery request response for the first serving cell; or, the beam failure recovery request response comprises a first-type PDCCH in a search space set used for the beam failure recovery request response for the first serving cell, and the first-type PDCCH satisfies that the CRC in the DCI format is scrambled by the RNTI in the first RNTI set; or, the beam failure recovery request response comprises a BFR RAR for the first serving cell.

6. The first node device according to any one of claims 1 to 5, comprising:
the first receiver receiving a third information block;
wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

7. The first node device according to any one of claims 1 to 6, wherein a first counter is used for counting beam failure event indications for the first serving cell; and when a value of the first counter is equal to or greater than a first threshold, beam failure recovery for the first serving cell is triggered.

8. A second node device for wireless communication, comprising:
a second transmitter sending a first information block, the first information block being used for configuring a first search space set on a first serving cell; and
sending a second information block, the second information block being used for determining a first time domain resource set;
wherein a recipient of the first information block monitors in a first time window PDCCHs in the first search space set, or, a recipient of the first information block abandons monitoring in a first time window PDCCHs in the first search space set; the monitoring is a detection for a DCI format in which a CRC is scrambled by an RNTI in a first RNTI set; the first RNTI set consists of one or more RNTIs; the first time window belongs to the first time domain resource set, and the first time window comprises at least one PDCCH candidate in the first search space set; whether a behavior of monitoring in the first time window the PDCCHs in the first search space set is executed depends on whether a first condition is satisfied; and the first condition comprises the first search space set being used for a beam failure recovery request response, or, the first condition comprises the recipient of the first information block monitoring in the first time window a beam failure recovery request response.

9. The second node device according to claim 8, wherein the first condition comprises the first search space set being used for the beam failure recovery request response; and when the first search space set is used for the beam failure recovery request response, the behavior of monitoring in the first time window the PDCCHs in the first search space set is executed.

10. The second node device according to claim 8, wherein the first condition comprises the recipient of the first information block monitoring in the first time window the beam failure recovery request response; and when the recipient of the first information block monitors in the first time window the beam failure recovery request response, the behavior of monitoring in the first time window the PDCCHs in the first search space set is executed.

11. The second node device according to any one of claims 8 to 10, comprising: a second receiver receiving in a first slot a first random access preamble, wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

12. The second node device according to any one of claims 8 to 11, wherein the beam failure recovery request response comprises PDCCHs in a search space set used for monitoring the beam failure recovery request response for the first serving cell; or, the beam failure recovery request response comprises a first-type PDCCH in a search space set used for the beam failure recovery request response for the first serving cell, and the first-type PDCCH satisfies that the CRC in the DCI format is scrambled by the RNTI in the first RNTI set; or, the beam failure recovery request response comprises a BFR RAR for the first serving cell.

13. The second node device according to any one of claims 8 to 12, comprising: a second transmitter sending a third information block, wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

14. The second node device according to any one of claims 8 to 13, wherein a first counter is used for counting beam failure event indications for the first serving cell; and when a value of the first counter is equal to or greater than a first threshold, beam failure recovery for the first serving cell is triggered.

15. A method used in a first node for wireless communication, comprising:
receiving a first information block, the first information block being used for configuring a first search space set on a first serving cell;
receiving a second information block, the second information block being used for determining a first time domain resource set; and
monitoring in a first time window PDCCHs in the first search space set, or, in a first time window, abandoning monitoring of PDCCHs in the first search space set, the monitoring being a detection for a DCI format in which a CRC is scrambled by an RNTI in a first RNTI set, the first RNTI set consisting of one or more RNTIs, the first time window belonging to the first time domain resource set, and the first time window comprising at least one PDCCH candidate in the first search space set;
wherein whether a behavior of monitoring in the first time window the PDCCHs in the first search space set is executed depends on whether a first condition is satisfied, and the first condition comprises the first search space set being used for a beam failure recovery request response, or, the first condition comprises the first node monitoring in the first time window a beam failure recovery request response.

16. The method according to claim 15, wherein the first condition comprises the first search space set being used for the beam failure recovery request response; and when the first search space set is used for the beam failure recovery request response, the behavior of monitoring in the first time window the PDCCHs in the first search space set is executed.

17. The method according to claim 15, wherein the first condition comprises the first node monitoring in the first time window the beam failure recovery request response; and when the first node monitors in the first time window the beam failure recovery request response, the behavior of monitoring in the first time window the PDCCHs in the first search space set is executed.

18. The method according to any one of claims 15 to 17, comprising: sending in a first slot a first random access preamble, wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

19. The method according to any one of claims 15 to 18, wherein the beam failure recovery request response comprises PDCCHs in a search space set used for monitoring the beam failure recovery request response for the first serving cell; or, the beam failure recovery request response comprises a first-type PDCCH in a search space set used for the beam failure recovery request response for the first serving cell, and the first-type PDCCH satisfies that the CRC in the DCI format is scrambled by the RNTI in the first RNTI set; or, the beam failure recovery request response comprises a BFR RAR for the first serving cell.

20. The method according to any one of claims 15 to 19, comprising: receiving a third information block, wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

21. The method according to any one of claims 15 to 20, wherein a first counter is used for counting beam failure event indications for the first serving cell; and when a value of the first counter is equal to or greater than a first threshold, beam failure recovery for the first serving cell is triggered.

22. A method used in a second node for wireless communication, comprising:
sending a first information block, the first information block being used for configuring a first search space set on a first serving cell; and
sending a second information block, the second information block being used for determining a first time domain resource set;
wherein a recipient of the first information block monitors in a first time window PDCCHs in the first search space set, or, a recipient of the first information block abandons monitoring in a first time window PDCCHs in the first search space set; the monitoring is a detection for a DCI format in which a CRC is scrambled by an RNTI in a first RNTI set; the first RNTI set consists of one or more RNTIs; the first time window belongs to the first time domain resource set, and the first time window comprises at least one PDCCH candidate in the first search space set; whether a behavior of monitoring in the first time window the PDCCHs in the first search space set is executed depends on whether a first condition is satisfied; and the first condition comprises the first search space set being used for a beam failure recovery request response, or, the first condition comprises the recipient of the first information block monitoring in the first time window a beam failure recovery request response.

23. The method according to claim 22, wherein the first condition comprises the first search space set being used for the beam failure recovery request response; and when the first search space set is used for the beam failure recovery request response, the behavior of monitoring in the first time window the PDCCHs in the first search space set is executed.

24. The method according to claim 22, wherein the first condition comprises the recipient of the first information block monitoring in the first time window the beam failure recovery request response; and when the recipient of the first information block monitors in the first time window the beam failure recovery request response, the behavior of monitoring in the first time window the PDCCHs in the first search space set is executed.

25. The method according to any one of claims 22 to 24, comprising: receiving in a first slot a first random access preamble, wherein the first random access preamble is used for a beam failure recovery request; and a response to the beam failure recovery request is an RAR for the first random access preamble, the RAR for the first random access preamble is monitored in a first response time window, a starting slot of the first response time window depends on the first slot, and the first time window belongs to the first response time window.

26. The method according to any one of claims 22 to 25, wherein the beam failure recovery request response comprises PDCCHs in a search space set used for monitoring the beam failure recovery request response for the first serving cell; or, the beam failure recovery request response comprises a first-type PDCCH in a search space set used for the beam failure recovery request response for the first serving cell, and the first-type PDCCH satisfies that the CRC in the DCI format is scrambled by the RNTI in the first RNTI set; or, the beam failure recovery request response comprises a BFR RAR for the first serving cell.

27. The method according to any one of claims 22 to 26, comprising: sending a third information block, wherein the third information block indicates a first index, and the first index is used for identifying the search space set for the beam failure recovery request response for the first serving cell; and only when an index of the first search space set is the first index, the first search space set is used for monitoring the response to the beam failure recovery request for the first serving cell therein.

28. The method according to any one of claims 22 to 27, wherein a first counter is used for counting beam failure event indications for the first serving cell; and when a value of the first counter is equal to or greater than a first threshold, beam failure recovery for the first serving cell is triggered.
